# EUROPEAN PATENT APPLICATION

(11) **EP 4 550 174 A1**
(43) Date of publication of application: **07.05.2025**
(21) Application number: 23207379.1
(22) Date of filing: 02.11.2023
(51) Int. Cl.: G06F 16/84, G06F 16/906, G06N 3/00, H04L 1/00

(54) **EXPANSION OR COMPRESSION OF TRANSPORT BLOCK(S) BASED ON A REVERSE AUTOENCODER NEURAL NETWORK**

(71) Applicant: Nokia Technologies Oy, 02610 Espoo (FI)
(72) Inventor: YANAKIEV, Boyan, Aalborg (DK); BARBU, Oana-Elena, Aalborg (DK); ROSA, Claudio, Randers NV (DK)
(74) Representative: Nokia EPO representatives

(57) **Abstract**

Various example embodiments relate to expansion or compression of data of a transport block. An apparatus may comprise means for receiving, from another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

## Description

### TECHNICAL FIELD

Various example embodiments generally relate to the field of data communication. Some example embodiments relate to expansion or compression of data of transport blocks based on a reverse autoencoder neural network.

### BACKGROUND

In various data communication systems, such as for example cellular communication networks, data may be transmitted in blocks on various protocol layers. Autoencoder is a type of neural network configured to learn codings of unlabelled data. An autoencoder may comprise an encoder trained for transformation of input data to an encoded (e.g., compressed) representation and a decoder trained for reconstructing the input data based on the encoded representation of the input data.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure improve spectral efficiency and robustness of block wise transmission of data. This and other benefits may be achieved by the features of the independent claims. Further example embodiments are provided in the dependent claims, the description, and the drawings.

According to a first aspect, an apparatus is disclosed. The apparatus may comprise: means for receiving, from another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

According to an example embodiment of the first aspect, the apparatus comprises: means for training at least one of the expander neural network or the compressor neural network based on the training assistance data.

According to an example embodiment of the first aspect, the training assistance data comprises an indication of at least one of: a type of at least one expander neural network or compressor neural network supported by the other apparatus, a maximum depth of the at least one expander neural network or compressor neural network supported by the other apparatus, a maximum input size of the at least one expander neural network or compressor neural network supported by the other apparatus, a capability to support parallel deployments of expander neural networks or compressor neural networks, or a capability for substantially real-time switching between the parallel deployments of the expander neural networks or compressor neural networks.

According to an example embodiment of the first aspect, the training assistance data is included in an expander capability report or a compressor capability report.

According to an example embodiment of the first aspect, the apparatus comprises: means for transmitting, to the other apparatus, at least one of the following: a configuration of the expander neural network, an identifier of the expander neural network, a configuration of the compressor neural network, or an identifier of the trained compressor neural network.

According to an example embodiment of the first aspect, the training assistance data comprises an indication of at least one of the following: a type of a radio channel configured for training the expander neural network or the compressor neural network at the other apparatus, a delay spread or a delay spread range of the radio channel, a Doppler spread or a Doppler spread range of the radio channel, or a signal-to-interference-plus-noise ratio or a signal-to-interference-plus-noise ratio range of the radio channel.

According to an example embodiment of the first aspect, the training assistance data comprises an indication of at least one of the following: a type or code rate of forward error correction coding configured for the transport block, a type or order of modulation order configured for the transport block, a minimum or maximum size for the transport block, a minimum or maximum code block size for segmentation of the transport block for the forward error correction coding, input size or output size of the expander neural network, or input size or output size of the compressor neural network.

According to an example embodiment of the first aspect, the apparatus comprises: means for receiving, from the other apparatus, at least one of the following: a schedule for training the expander neural network or the compressor neural network, or an event configured to trigger the training of the expander neural network or the compressor neural network; and means for configuring training of the expander neural network or the compressor neural network based on the schedule for the training or the event configured to trigger the training.

According to an example embodiment of the first aspect, the event comprises at least one of the following: a predetermined degradation in radio link quality between the apparatus and the other apparatus, or a request for initiating the training from the other apparatus.

According to an example embodiment of the first aspect, the apparatus comprises: means for transmitting, to the other apparatus, at least one of the following: training data used for training the expander neural network or the compressor neural network, an identifier of the expander neural network trained with the training data with, or an identifier of the compressor neural network trained with the training data.

According to an example embodiment of the first aspect, the apparatus comprises: means for transmitting, to the other apparatus, at least one of the following: a schedule for updating the expander neural network or the compressor neural network, an indication of an event configured to trigger updating of the expander neural network or the compressor neural network during an inference period of the expander neural network or the compressor neural network, at least one condition for enabling or disabling the expander neural network or the compressor neural network, or an indication of an event configured to trigger fallback to non-neural expansion or compression of data of transport blocks.

According to an example embodiment of the first aspect, the schedule for updating the expander neural network or the compressor neural network comprises at least one of the following: at least one update period for the expander neural network or the compressor neural network, or at least one inference period for the expander neural network or the compressor neural network.

According to an example embodiment of the first aspect, the apparatus comprises: means for communicating, with the other apparatus, signalling information comprising at least one of the following: an identifier of the expander neural network or compressor neural network applied to the data of the transport block, input and output of the expander neural network or compressor neural network applied to the data of the transport block, or an amount of expanded data in the expanded representation of the data of the transport block or an amount of compressed data in the compressed representation of the data of the transport block.

According to an example embodiment of the first aspect, the signalling information is configured to be communicated as out-of-band signalling without application of the expander neural network to the signalling data.

According to an example embodiment of the first aspect, the apparatus comprises: means for determining a cyclic redundancy check code based on the expanded representation of the data of the transport block; and means for appending the expanded representation of the data of the transport block with the cyclic redundancy check code.

According to an example embodiment of the first aspect, the expander neural network is configured to determine expanded representations of data of a plurality of transport blocks to cause the data of the plurality of transport blocks to have the designated size; and the compressor neural network is configured to determine, based on the expanded representations of the data of the plurality of transport blocks, compressed representations of the data of the plurality of transport blocks to reconstruct the data of the plurality of transport blocks.

According to a second aspect, a network device is disclosed. The network device may comprise the apparatus according to the first aspect, or any example embodiment(s) thereof.

According to an example embodiment of the second aspect, the network device comprises: means for training the compressor neural network based on training data received from a plurality of devices associated with a plurality of vendors, wherein the training data of the plurality of devices are associated with vendor-specific identifiers; means for assigning a common identifier for the compressor neural network trained based on the training data received from the plurality of devices; and means for transmitting the common identifier to the plurality of devices.

According to a third aspect, an apparatus is disclosed. The apparatus may comprise: means for transmitting, to another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

According to an example embodiment of the third aspect, the training assistance data comprises an indication of at least one of: a type of at least one expander neural network or compressor neural network supported by the other apparatus, a maximum depth of the at least one expander neural network or compressor neural network supported by the other apparatus, a maximum input size of the at least one expander neural network or compressor neural network supported by the other apparatus, a capability to support parallel deployments of expander neural networks or compressor neural networks, or a capability for substantially real-time switching between the parallel deployments of the expander neural networks or compressor neural networks.

According to an example embodiment of the third aspect, the training assistance data is included in an expander capability report or a compressor capability report.

According to an example embodiment of the third aspect, the apparatus comprises: means for receiving, from the other apparatus, at least one of the following: a configuration of the expander neural network, an identifier of the expander neural network, a configuration of the compressor neural network, or an identifier of the compressor neural network; and means for applying the configuration of the expander neural network or the configuration of the compressor neural network to the data of the transport block.

According to an example embodiment of the third aspect, the training assistance data comprises an indication of at least one of the following: a type of a radio channel configured for training the expander neural network or the compressor neural network at the other apparatus, a delay spread or a delay spread range of the radio channel, a Doppler spread or a Doppler spread range of the radio channel, a signal-to-interference-plus-noise ratio or a signal-to-interference-plus-noise ratio range of the radio channel.

According to an example embodiment of the third aspect, the training assistance data comprises an indication of at least one of the following: a type or code rate of forward error correction coding configured for the transport block, a type or order of modulation order configured for the transport block, a minimum or maximum size for the transport block, a minimum or maximum code block size for segmentation of the transport block for the forward error correction coding, input size or output size of the expander neural network, or input size or output size of the compressor neural network.

According to an example embodiment of the third aspect, the apparatus comprises: means for transmitting, to the other apparatus, at least one of the following: a schedule for training the expander neural network or the compressor neural network, or an event configured to trigger the training of the expander neural network or the compressor neural network.

According to an example embodiment of the third aspect, the event comprises at least one of the following: a predetermined degradation in radio link quality between the apparatus and the other apparatus, or receiving a request for initiating the training from the other apparatus.

According to an example embodiment of the third aspect, the apparatus comprises: means for receiving, from the other apparatus, training data used for training a trained part of the reverse autoencoder neural network; and means for training a non-trained part of the reverse autoencoder neural network based on the training data and/or the training assistance data.

According to an example embodiment of the third aspect, the apparatus comprises: means for receiving, from the other apparatus, an identifier of the trained part of the reverse autoencoder neural network trained with the training data, and means for assigning the identifier of the trained part of the reverse autoencoder neural network to the non-trained part of the reverse autoencoder neural network in association with training the non-trained part of the reverse autoencoder neural network with the training data.

According to an example embodiment of the third aspect, the apparatus comprises: means for receiving, from the other apparatus, at least one of the following: a schedule for updating the expander neural network or the compressor neural network, an indication of an event configured to trigger updating of the expander neural network or the compressor neural network during an inference period of the expander neural network; at least one condition for enabling or disabling the expander neural network or the compressor neural network, or an indication of an event configured to trigger fallback to non-neural expansion or compression of data of transport blocks; and means for configuring the updating of the expander neural network or the compressor neural network based on the schedule for updating the expander neural network or the compressor neural network, means for initiating the updating of the expander neural network or the compressor neural network based on detecting, during the inference period of expander neural network or the compressor neural network, the event configured to trigger updating of the expander neural network or the compressor neural network, means for enabling or disabling the expander neural network or the compressor neural network based on the at least one condition, or means for disabling the expander neural network or the compressor neural network based on detecting the event triggering the fallback.

According to an example embodiment of the third aspect, the schedule for updating the expander neural network or the compressor neural network comprises at least one of the following: at least one update period for the expander neural network or the compressor neural network, or at least one inference period for the expander neural network or the compressor neural network.

According to an example embodiment of the third aspect, the apparatus comprises: means for communicating, with the other apparatus, signalling information comprising at least one of the following: an identifier of the expander neural network applied to the data of the transport block, input and output of the expander neural network applied to the data of the transport block, or an amount of expanded data in the expanded representation of the data of the transport block.

According to an example embodiment of the third aspect, the signalling information is configured to be communicated as out-of-band signalling without application of the expander neural network to the signalling data.

According to an example embodiment of the third aspect, the apparatus comprises: means for determining a cyclic redundancy check code based on the expanded representation of the data of the transport block; and means for appending the expanded representation of the data of the transport block with the cyclic redundancy check code.

According to an example embodiment of the third aspect, the expander neural network is configured to determine expanded representations of data of a plurality of transport blocks to cause the data of the plurality of transport blocks to have the designated size; and wherein the compressor neural network is configured to determine, based on the expanded representation of the data of the plurality of transport blocks, compressed representations of the data of the plurality of transport blocks to reconstruct the data of the plurality of transport blocks.

According to a fourth aspect, a terminal device is disclosed. The terminal device may comprise the apparatus according to the third aspect, or any example embodiment(s) thereof.

According to a fifth aspect, a method is disclosed. The method may comprise: receiving, by an apparatus from another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

According to an example embodiment of the fifth aspect, the method comprises: training at least one of the expander neural network or the compressor neural network based on the training assistance data.

According to an example embodiment of the fifth aspect, the training assistance data comprises an indication of at least one of: a type of at least one expander neural network or compressor neural network supported by the other apparatus, a maximum depth of the at least one expander neural network or compressor neural network supported by the other apparatus, a maximum input size of the at least one expander neural network or compressor neural network supported by the other apparatus, a capability to support parallel deployments of expander neural networks or compressor neural networks, or a capability for substantially real-time switching between the parallel deployments of the expander neural networks or compressor neural networks.

According to an example embodiment of the fifth aspect, the training assistance data is included in an expander capability report or a compressor capability report.

According to an example embodiment of the fifth aspect, the method comprises: transmitting, to the other apparatus, at least one of the following: a configuration of the expander neural network, an identifier of the expander neural network, a configuration of the compressor neural network, or an identifier of the trained compressor neural network.

According to an example embodiment of the fifth aspect, the training assistance data comprises an indication of at least one of the following: a type of a radio channel configured for training the expander neural network or the compressor neural network at the other apparatus, a delay spread or a delay spread range of the radio channel, a Doppler spread or a Doppler spread range of the radio channel, or a signal-to-interference-plus-noise ratio or a signal-to-interference-plus-noise ratio range of the radio channel.

According to an example embodiment of the fifth aspect, the training assistance data comprises an indication of at least one of the following: a type or code rate of forward error correction coding configured for the transport block, a type or order of modulation order configured for the transport block, a minimum or maximum size for the transport block, a minimum or maximum code block size for segmentation of the transport block for the forward error correction coding, input size or output size of the expander neural network, or input size or output size of the compressor neural network.

According to an example embodiment of the fifth aspect, the method comprises: receiving, from the other apparatus, at least one of the following: a schedule for training the expander neural network or the compressor neural network, or an event configured to trigger the training of the expander neural network or the compressor neural network; and means for configuring training of the expander neural network or the compressor neural network based on the schedule for the training or the event configured to trigger the training.

According to an example embodiment of the fifth aspect, the event comprises at least one of the following: a predetermined degradation in radio link quality between the apparatus and the other apparatus, or a request for initiating the training from the other apparatus.

According to an example embodiment of the fifth aspect, the method comprises: transmitting, to the other apparatus, at least one of the following: training data used for training the expander neural network or the compressor neural network, an identifier of the expander neural network trained with the training data with, or an identifier of the compressor neural network trained with the training data.

According to an example embodiment of the fifth aspect, the method comprises: transmitting, to the other apparatus, at least one of the following: a schedule for updating the expander neural network or the compressor neural network, an indication of an event configured to trigger updating of the expander neural network or the compressor neural network during an inference period of the expander neural network or the compressor neural network, at least one condition for enabling or disabling the expander neural network or the compressor neural network, or an indication of an event configured to trigger fallback to non-neural expansion or compression of data of transport blocks.

According to an example embodiment of the fifth aspect, the schedule for updating the expander neural network or the compressor neural network comprises at least one of the following: at least one update period for the expander neural network or the compressor neural network, or at least one inference period for the expander neural network or the compressor neural network.

According to an example embodiment of the fifth aspect, the method comprises: communicating, with the other apparatus, signalling information comprising at least one of the following: an identifier of the expander neural network or compressor neural network applied to the data of the transport block, input and output of the expander neural network or compressor neural network applied to the data of the transport block, or an amount of expanded data in the expanded representation of the data of the transport block or an amount of compressed data in the compressed representation of the data of the transport block.

According to an example embodiment of the fifth aspect, the signalling information is communicated as out-of-band signalling without application of the expander neural network to the signalling data.

According to an example embodiment of the fifth aspect, the method comprises: determining a cyclic redundancy check code based on the expanded representation of the data of the transport block; and appending the expanded representation of the data of the transport block with the cyclic redundancy check code.

According to an example embodiment of the fifth aspect, the expander neural network is configured to determine expanded representations of data of a plurality of transport blocks to cause the data of the plurality of transport blocks to have the designated size; and the compressor neural network is configured to determine, based on the expanded representations of the data of the plurality of transport blocks, compressed representations of the data of the plurality of transport blocks to reconstruct the data of the plurality of transport blocks.

According to an example embodiment of the fifth aspect, the method, or any example embodiment(s) thereof, may be performed by an apparatus, such as a network device.

According to a sixth aspect, a method is disclosed. The method may comprise: transmitting, by an apparatus to another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

According to an example embodiment of the sixth aspect, the training assistance data comprises an indication of at least one of: a type of at least one expander neural network or compressor neural network supported by the other apparatus, a maximum depth of the at least one expander neural network or compressor neural network supported by the other apparatus, a maximum input size of the at least one expander neural network or compressor neural network supported by the other apparatus, a capability to support parallel deployments of expander neural networks or compressor neural networks, or a capability for substantially real-time switching between the parallel deployments of the expander neural networks or compressor neural networks.

According to an example embodiment of the sixth aspect, the training assistance data is included in an expander capability report or a compressor capability report.

According to an example embodiment of the sixth aspect, the method comprises: receiving, from the other apparatus, at least one of the following: a configuration of the expander neural network, an identifier of the expander neural network, a configuration of the compressor neural network, or an identifier of the compressor neural network; and applying the configuration of the expander neural network or the configuration of the compressor neural network to the data of the transport block.

According to an example embodiment of the sixth aspect, the training assistance data comprises an indication of at least one of the following: a type of a radio channel configured for training the expander neural network or the compressor neural network at the other apparatus, a delay spread or a delay spread range of the radio channel, a Doppler spread or a Doppler spread range of the radio channel, a signal-to-interference-plus-noise ratio or a signal-to-interference-plus-noise ratio range of the radio channel.

According to an example embodiment of the sixth aspect, the training assistance data comprises an indication of at least one of the following: a type or code rate of forward error correction coding configured for the transport block, a type or order of modulation order configured for the transport block, a minimum or maximum size for the transport block, a minimum or maximum code block size for segmentation of the transport block for the forward error correction coding, input size or output size of the expander neural network, or input size or output size of the compressor neural network.

According to an example embodiment of the sixth aspect, the method comprises: transmitting, to the other apparatus, at least one of the following: a schedule for training the expander neural network or the compressor neural network, or an event configured to trigger the training of the expander neural network or the compressor neural network.

According to an example embodiment of the sixth aspect, the event comprises at least one of the following: a predetermined degradation in radio link quality between the apparatus and the other apparatus, or receiving a request for initiating the training from the other apparatus.

According to an example embodiment of the sixth aspect, the method comprises: receiving, from the other apparatus, training data used for training a trained part of the reverse autoencoder neural network; and training a non-trained part of the reverse autoencoder neural network based on the training data and/or the training assistance data.

According to an example embodiment of the sixth aspect, the method comprises: receiving, from the other apparatus, an identifier of the trained part of the reverse autoencoder neural network trained with the training data, and assigning the identifier of the trained part of the reverse autoencoder neural network to the non-trained part of the reverse autoencoder neural network in association with training the non-trained part of the reverse autoencoder neural network with the training data.

According to an example embodiment of the sixth aspect, the method comprises: receiving, from the other apparatus, at least one of the following: a schedule for updating the expander neural network or the compressor neural network, an indication of an event configured to trigger updating of the expander neural network or the compressor neural network during an inference period of the expander neural network; at least one condition for enabling or disabling the expander neural network or the compressor neural network, or an indication of an event configured to trigger fallback to non-neural expansion or compression of data of transport blocks; and configuring the updating of the expander neural network or the compressor neural network based on the schedule for updating the expander neural network or the compressor neural network, initiating the updating of the expander neural network or the compressor neural network based on detecting, during the inference period of expander neural network or the compressor neural network, the event configured to trigger updating of the expander neural network or the compressor neural network, enabling or disabling the expander neural network or the compressor neural network based on the at least one condition, or disabling the expander neural network or the compressor neural network based on detecting the event triggering the fallback.

According to an example embodiment of the sixth aspect, the schedule for updating the expander neural network or the compressor neural network comprises at least one of the following: at least one update period for the expander neural network or the compressor neural network, or at least one inference period for the expander neural network or the compressor neural network.

According to an example embodiment of the sixth aspect, the method comprises: communicating, with the other apparatus, signalling information comprising at least one of the following: an identifier of the expander neural network applied to the data of the transport block, input and output of the expander neural network applied to the data of the transport block, or an amount of expanded data in the expanded representation of the data of the transport block.

According to an example embodiment of the sixth aspect, the signalling information is communicated as out-of-band signalling without application of the expander neural network to the signalling data.

According to an example embodiment of the sixth aspect, the apparatus comprises: determining a cyclic redundancy check code based on the expanded representation of the data of the transport block; and appending the expanded representation of the data of the transport block with the cyclic redundancy check code.

According to an example embodiment of the sixth aspect, the expander neural network is configured to determine expanded representations of data of a plurality of transport blocks to cause the data of the plurality of transport blocks to have the designated size; and the compressor neural network is configured to determine, based on the expanded representation of the data of the plurality of transport blocks, compressed representations of the data of the plurality of transport blocks to reconstruct the data of the plurality of transport blocks.

According to an example embodiment of the sixth aspect, the method, or any example embodiment(s) thereof, may be performed by an apparatus such as a terminal device.

According to a seventh aspect, a transmitter is disclosed. The transmitter may comprise: means for receiving data for transmission in a transport block; means for determining, by an expander neural network, an expanded representation for the data of the transport block to cause the data of the transport block to have a designated size, wherein the expander neural network is an encoder of a reverse autoencoder neural network; and means for transmitting the expanded representation of the data in the transport block.

According to an example embodiment of the seventh aspect, the expander neural network has been trained by jointly training the expander neural network and a compressor neural network, wherein the compressor neural network is a decoder of the reverse autoencoder neural network.

According to an example embodiment of the seventh aspect, the transmitter comprises: means for transferring the compressor neural network to a receiver.

According to an example embodiment of the seventh aspect, the expander neural network has been trained by training the expander neural network with a nominal compressor neural network representative of a decoder of the reverse autoencoder neural network.

According to an example embodiment of the seventh aspect, the transmitter comprises: means for transferring training data used for training the expander neural network to a receiver for training the decoder of the reverse autoencoder neural network, wherein the training data comprises pairs of input and output training data of the expander neural network.

According to an example embodiment of the seventh aspect, the expander neural network has been trained based on a loss function configured to compare: similarity of the data of the transport block at the input of the expander neural network and the data of the transport block at the output of the compressor neural network or the nominal compressor neural network, and a size of the data of the transport block at the input of the expander neural network to a size of the data of the transport block at an output of the compressor neural network or the nominal compressor neural network.

According to an example embodiment of the seventh aspect, an output of the expander neural network and an input of the compressor neural network or the nominal compressor neural network are dimensioned according to the designated size of the data of the transport block.

According to an example embodiment of the seventh aspect, the transmitter comprises: means for forward error correction encoding the transport block to obtain forward error correction encoded data; and means for modulating the forward error correction encoded data to obtain modulation symbols configured to carry the transport block in transmission.

According to an example embodiment of the seventh aspect, the transmitter comprises: means for segmenting the transport block into code blocks for forward error correction encoding the transport block; and means for forward error correction encoding the code blocks to obtain the forward error correction encoded data.

According to an example embodiment of the seventh aspect, the expander neural network has been trained based on a transmission chain provided between the expander neural network and the compressor neural network or the nominal compressor neural network, wherein the transmission chain comprises at least one of: forward error correction encoding and decoding with a particular code type or code rate, modulation and demodulation with a particular modulation type or modulation order, or a channel model with at least one designated channel parameter.

According to an example embodiment of the seventh aspect, the at least one designated channel parameter comprises a signal-to-interference-plus-noise ratio, delay spread, or Doppler spread.

According to an example embodiment of the seventh aspect the transmission chain is simulated by the transmitter.

According to an example embodiment of the seventh aspect, the transmitter comprises: means for receiving data for transmission in a plurality of transport blocks, data for at least two of the plurality of transport blocks having different sizes; means for determining, by the expander neural network, an expanded representation of data of at least one of the plurality of transport blocks to cause the data of the plurality of transport blocks to have the designated size; and means for transmitting the plurality of transport blocks with the expanded representation of the data in the at least one transport block.

According to an eighth aspect, a user equipment is disclosed. The user equipment may comprise the transmitter according to the seventh aspect, or any example embodiment(s) thereof.

According to a ninth aspect, receiver is disclosed. The receiver may comprise: means for receiving data of a transport block, the data having a designated size; means for determining, by a compressor neural network, a compressed representation of the data of the transport block, wherein the compressor neural network is a decoder of a reverse autoencoder neural network; and means for outputting the compressed representation of the data of the transport block.

According to an example embodiment of the ninth aspect, the compressor neural network has been trained by jointly training the compressor neural network and an expander neural network, wherein the expander neural network is an encoder of the reverse autoencoder neural network.

According to an example embodiment of the ninth aspect, the receiver comprises: means for transferring the expander neural network to a transmitter.

According to an example embodiment of the ninth aspect, the compressor neural network has been trained by training the compressor neural network with a nominal expander neural network representative of an encoder of the reverse autoencoder neural network.

According to an example embodiment of the ninth aspect, the receiver comprises: means for transferring training data used for training the compressor neural network to a transmitter for training the expander neural network, wherein the training data comprises pairs of input and output training data of the compressor neural network.

According to an example embodiment of the ninth aspect, the compressor neural network has been trained based on a loss function configured to compare: similarity of the data of the transport block at an output of the compressor neural network and the data of the transport block at an input of the expander neural network or the nominal expander neural network, and a size of the data of the transport block at the input of the expander neural network or the nominal expander neural network to a size of the data of the transport block at the output of the compressor neural network.

According to an example embodiment of the ninth aspect, an output of the expander neural network or the nominal expander neural network and an input of the compressor neural network are dimensioned according to the designated size of the data of the transport block.

According to an example embodiment of the ninth aspect, the receiver comprises: means for demodulating the transport block to obtain demodulated data; means for forward error correction decoding the demodulated data; and means for providing the forward error correction decoded data as input data to the compressor neural network for determining the compressed representation for the data of the transport block.

According to an example embodiment of the ninth aspect, the receiver comprises: means for combining code blocks of the forward error correction decoded data to obtain the data of the transport block for provision as input data to the compressor neural network.

According to an example embodiment of the ninth aspect, the compressor neural network has been trained based on a transmission chain provided between the compressor neural network and the expander neural network or the nominal expander neural network, wherein the transmission chain comprises at least one of: forward error correction encoding and decoding with a particular code type or code rate, modulation and demodulation with a particular modulation type or modulation order, or a channel model with at least one designated channel parameter.

According to an example embodiment of the ninth aspect, the at least one designated channel parameter comprises a signal-to-interference-plus-noise ratio, delay spread, or Doppler spread.

According to an example embodiment of the ninth aspect, the transmission chain is simulated by the receiver.

According to an example embodiment of the ninth aspect, the receiver comprises: means for receiving data of a plurality of transport blocks, the data having the designated size; means for determining, by the compressor neural network, a compressed representation for data of at least one of the plurality of transport blocks; and means for outputting the plurality of transport blocks with the compressed representation of the data of the at least one of the plurality of transport blocks.

According to a tenth aspect, an access node is disclosed. The access node may comprise the receiver according to the ninth aspect, or any example embodiment(s) thereof.

According to an eleventh aspect, a method is disclosed. The method may comprise: receiving data for transmission in a transport block; determining, by an expander neural network, an expanded representation for the data of the transport block to cause the data of the transport block to have a designated size, wherein the expander neural network is an encoder of a reverse autoencoder neural network; and transmitting the expanded representation of the data in the transport block.

According to an example embodiment of the eleventh aspect, the expander neural network has been trained by jointly training the expander neural network and a compressor neural network, wherein the compressor neural network is a decoder of the reverse autoencoder neural network.

According to an example embodiment of the eleventh aspect, the method comprises: transferring the compressor neural network to a receiver.

According to an example embodiment of the eleventh aspect, the expander neural network has been trained by training the expander neural network with a nominal compressor neural network representative of a decoder of the reverse autoencoder neural network.

According to an example embodiment of the eleventh aspect, the method comprises: transferring training data used for training the expander neural network to a receiver for training the decoder of the reverse autoencoder neural network, wherein the training data comprises pairs of input and output training data of the expander neural network.

According to an example embodiment of the eleventh aspect, the expander neural network has been trained based on a loss function configured to compare: similarity of the data of the transport block at the input of the expander neural network and the data of the transport block at the output of the compressor neural network or the nominal compressor neural network, and a size of the data of the transport block at the input of the expander neural network to a size of the data of the transport block at an output of the compressor neural network or the nominal compressor neural network.

According to an example embodiment of the eleventh aspect, an output of the expander neural network and an input of the compressor neural network or the nominal compressor neural network are dimensioned according to the designated size of the data of the transport block.

According to an example embodiment of the eleventh aspect, the method comprises: forward error correction encoding the transport block to obtain forward error correction encoded data; and modulating the forward error correction encoded data to obtain modulation symbols configured to carry the transport block in transmission.

According to an example embodiment of the eleventh aspect, the method comprises: segmenting the transport block into code blocks for forward error correction encoding the transport block; and forward error correction encoding the code blocks to obtain the forward error correction encoded data.

According to an example embodiment of the eleventh aspect, the expander neural network has been trained based on a transmission chain provided between the expander neural network and the compressor neural network or the nominal compressor neural network, wherein the transmission chain comprises at least one of: forward error correction encoding and decoding with a particular code type or code rate, modulation and demodulation with a particular modulation type or modulation order, or a channel model with at least one designated channel parameter.

According to an example embodiment of the eleventh aspect, the at least one designated channel parameter comprises a signal-to-interference-plus-noise ratio, delay spread, or Doppler spread.

According to an example embodiment of the eleventh aspect, the method comprises: simulating the transmission chain.

According to an example embodiment of the eleventh aspect, the method comprises: receiving data for transmission in a plurality of transport blocks, data for at least two of the plurality of transport blocks having different sizes; determining, by the expander neural network, an expanded representation of data of at least one of the plurality of transport blocks to cause the data of the plurality of transport blocks to have the designated size; and transmitting the plurality of transport blocks with the expanded representation of the data in the at least one transport block.

According to an eleventh aspect, the method, or any example embodiment(s) thereof, may be performed by an apparatus such as a user equipment.

According to a twelfth aspect, a method is disclosed. The method may comprise: receiving data of a transport block, the data having a designated size; determining, by a compressor neural network, a compressed representation of the data of the transport block, wherein the compressor neural network is a decoder of a reverse autoencoder neural network; and outputting the compressed representation of the data of the transport block.

According to an example embodiment of the twelfth aspect, the compressor neural network has been trained by jointly training the compressor neural network and an expander neural network, wherein the expander neural network is an encoder of the reverse autoencoder neural network.

According to an example embodiment of the twelfth aspect, the method comprises: transferring the expander neural network to a transmitter.

According to an example embodiment of the twelfth aspect, the compressor neural network has been trained by training the compressor neural network with a nominal expander neural network representative of an encoder of the reverse autoencoder neural network.

According to an example embodiment of the twelfth aspect, the method comprises: transferring training data used for training the compressor neural network to a transmitter for training the expander neural network, wherein the training data comprises pairs of input and output training data of the compressor neural network.

According to an example embodiment of the twelfth aspect, the compressor neural network has been trained based on a loss function configured to compare: similarity of the data of the transport block at an output of the compressor neural network and the data of the transport block at an input of the expander neural network or the nominal expander neural network, and a size of the data of the transport block at the input of the expander neural network or the nominal expander neural network to a size of the data of the transport block at the output of the compressor neural network.

According to an example embodiment of the twelfth aspect, an output of the expander neural network or the nominal expander neural network and an input of the compressor neural network are dimensioned according to the designated size of the data of the transport block.

According to an example embodiment of the twelfth aspect, the method comprises: demodulating the transport block to obtain demodulated data; forward error correction decoding the demodulated data; and providing the forward error correction decoded data as input data to the compressor neural network for determining the compressed representation for the data of the transport block.

According to an example embodiment of the twelfth aspect, the method comprises: combining code blocks of the forward error correction decoded data to obtain the data of the transport block for provision as input data to the compressor neural network.

According to an example embodiment of the twelfth aspect, the compressor neural network has been trained based on a transmission chain provided between the compressor neural network and the expander neural network or the nominal expander neural network, wherein the transmission chain comprises at least one of: forward error correction encoding and decoding with a particular code type or code rate, modulation and demodulation with a particular modulation type or modulation order, or a channel model with at least one designated channel parameter.

According to an example embodiment of the twelfth aspect, the at least one designated channel parameter comprises a signal-to-interference-plus-noise ratio, delay spread, or Doppler spread.

According to an example embodiment of the twelfth aspect, the method comprises: simulating the transmission chain.

According to an example embodiment of the twelfth aspect, the method comprises: receiving data of a plurality of transport blocks, the data having the designated size; determining, by the compressor neural network, a compressed representation for data of at least one of the plurality of transport blocks; and outputting the plurality of transport blocks with the compressed representation of the data of the at least one of the plurality of transport blocks.

According to an example embodiment of the twelfth aspect, the method, or any example embodiment(s) thereof, may be performed by an apparatus such as a receiver.

According to a thirteenth aspect, an apparatus is disclosed. The apparatus may comprise: at least one processor; and at least one memory storing instructions that, when executed by the at least one processor, cause the apparatus at least to perform the method of the fifth or sixth aspect, or any example embodiment(s) thereof.

According to a fourteenth aspect, a transmitter is disclosed. The transmitter may comprise: at least one processor; and at least one memory storing instructions that, when executed by the at least one processor, cause the transmitter at least to perform the method of the eleventh aspect, or any example embodiment(s) thereof.

According to a fifteenth aspect, a receiver is disclosed. The receiver may comprise: at least one processor; and at least one memory storing instructions that, when executed by the at least one processor, cause the receiver at least to perform the method of the twelfth aspect, or any example embodiment(s) thereof.

According to a sixteenth aspect, a computer program, a computer program product, or a (non-transitory) computer-readable medium is disclosed. The computer program, computer program product, or (non-transitory) computer-readable medium may comprise instructions, which when executed by an apparatus, cause the apparatus at least to perform the method according to the fifth, sixth, eleventh, or twelfth aspect, or any example embodiment(s) thereof.

According to a seventeenth aspect, a system is disclosed. The system may comprise: a transmitter, comprising: means for receiving data for transmission in a transport block, means for determining, by an expander neural network, an expanded representation for the data of the transport block to cause the data of the transport block to have a designated size, wherein the expander neural network is an encoder of a reverse autoencoder neural network, and means for transmitting the expanded representation of the data in the transport block; and a receiver, comprising: means for receiving the data of the transport block, the data having the designated size, means for determining, by a compressor neural network, a compressed representation of the data of the transport block, wherein the compressor neural network is a decoder of the reverse autoencoder neural network, and means for outputting the compressed representation of the data of the transport block. The transmitter and/or the receiver of the system may be configured according to any example embodiment of the seventh, ninth, fourteenth, or fifteenth aspect.

Example embodiments of the present disclosure can thus provide apparatuses, methods, computer programs, computer program products, or computer readable media for improving various aspects of wireless tethering. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

### DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a communication network;
FIG. 2 illustrates an example of an apparatus configured to practice one or more example embodiments;
FIG. 3 illustrates an example of padding-based transmission of a transport block;
FIG. 4 illustrates an example of a neural network;
FIG. 5 illustrates an example of an elementary computation unit;
FIG. 6 illustrates an example of a reverse auto-encoder neural network;
FIG. 7 illustrates an example of expanding and compressing data of a transport block by a reverse autoencoder neural network;
FIG. 8 illustrates an example of a transmission chain with expansion and compression of data of transport block(s) based on a reverse autoencoder neural network;
FIG. 9 illustrates an example of training expander neural network(s) and signalling training data to an apparatus configured to train respective compressor neural network(s);
FIG. 10 illustrates an example of signalling and operations for training a reverse autoencoder for expanding and compressing data of transport blocks;
FIG. 11 illustrates an example of a method for expanding data of transport block(s) by an expander neural network;
FIG. 12 illustrates an example of a method for compressing data of transport block(s) by a compressor neural network;
FIG. 13 illustrates an example of a method for receiving training assistance data for training at least one part of a reverse autoencoder neural network; and
FIG. 14 illustrates an example of a method for transmitting training assistance data for training at least one part of a reverse autoencoder neural network.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Communication systems may be operated based on a protocol stack comprising a plurality of protocol layers. The protocol stack may be arranged based on, for example, the open systems interconnection (OSI) model or a layer model of a particular standard. Corresponding protocol stacks may be applied at a transmitter and a receiver. When optimising throughput of communication systems, operations on different layers of the protocol stack may be designed with focus on spectral efficiency. In this case, every bit of protocol overhead may be considered to count and therefore it may be desired to minimize the number of transmitted bits. While being spectrally efficient, this may however result in complex procedures and implementation at the transmitter or the receiver. One reason for optimizing spectral efficiency is the scarce and expensive frequency spectrum. Priorities may however shift, for example with wider adoption of new frequency bands below 6 GHz, introduction of Frequency Range 2 (FR2) bands in the millimetre wave spectrum, and the opening of frequencies in the range of 7 GHz to 20 GHz. Some aspects of designing future mobile communication networks (e.g., 6G) focus on power consumption and even higher data rates.

In one example, a protocol stack may comprise a service data adaptation protocol (SDAP) layer, which may be configured to receive data from an application layer for transmission. The SDAP layer may be configured to provide the data to a packet data convergence protocol (PDCP) layer. The PDCP layer may be responsible of generation of data bursts comprising one or more data packets, for example based on data obtained from the SDAP layer. The PDCP layer may provide data to one or more instances of the radio link control (RLC) layer. For example, PDCP data may be transmitted on one or more RLC transmission legs.

Each RLC instance may be associated with corresponding MAC instances of the MAC layer. The MAC layer may provide a mapping between logical channels of upper layer(s) and transport channels of the physical layer, handle multiplexing and demultiplexing of MAC service data units (SDU). Furthermore, the MAC layer may provide error correction functionality based on packet retransmissions, for example according to the hybrid automatic repeat request (HARQ) process. Physically separate transmission legs may be provided by the physical (PHY) layer, also known as layer 1 (L1).

The MAC, RLC, PCDP, or SDAP protocols may be referred to as layer 2 (L2) protocols. In general, L2 protocols may be configured to provide functionality similar to the data link layer of the OSI model. For example, L2 protocol(s) may be configured to provide functional or procedural means for transferring data between network entities, and optionally provide means to detect or correct errors occurring on the physical layer. L2 protocols may be configured to transmit blocks of data, for example protocol data units (PDU). Corresponding protocol stacks may be applied at a receiver, which may be configured to pass the data through the protocol layers in a reverse order.

Combination of both high data rates and high power efficiency may cause rethinking of operational aspects of different protocol layers. For example, L2 processing may be sometimes considered as a bottle neck regarding ability of devices to process the data. L2 processing might for example suffer from complexity as the various L2 sublayers might be configured to perform complex tasks, such as for example minimize transmission overhead by dynamically applying protocol headers of varying size.

Furthermore, some operations such as ciphering on the PDPC layer may be optimized for hardware implementation. This may however come at the cost of needing move data to and from a dedicated hardware block. On the other hand, RLC segmentation may be performed in a central processing unit (CPU) without hardware acceleration. It may be desired to provide a streamlined, hardware-accelerated L2 to enable the envisioned power efficient and high-data-rate transmission. As an example, the internet protocol version six (IPv6) provides a fixed header size with significant overhead compared to the more dynamic header of IP version 4 (IPv4). This enables very efficiency routing up to data rates in the range of many Gbps, even though the IPv6 address space might be significantly overdimensioned. In general, operations may be configured to be performed in the CPU, but slower than in case of hardware acceleration. Alternatively, the operations may be hardware optimized at the cost of more limited flexibility. In some solutions, a balance between the speed of hardware-acceleration and the flexibility of CPU processing may be achieved with the optimization goal of minimising the protocol header overhead. Example embodiments of the present disclosure may be applied for example when larger overhead is allowed based on the assumption that bandwidth is less important than power and when utilizing more hardware accelerated operations.

Some L2 solutions aim to avoid protocol overhead by tightly packing dynamically constructed and deconstructed headers at the cost of processing time. The MAC layer might also include a padding procedure, where MAC control elements (CE) are dynamically added, for example in case of transmission of a buffer status report (BSR) in the padding bit space of a transport block (TB). However, even with such dynamic MAC CE transmission, the available transport block space might not be fully occupied and the MAC layer might be configured to add padding (e.g., zero padding) to the transport block.

Hardware optimization for speed and power efficiency has the tendency of growing the amount of protocol overhead - for example if an RLC procedure like segmentation is not used. However, under the assumptions of the frequency spectrum becoming more widely available and power efficiency taking a more prominent spot in the design targets for future communication systems, some additional protocol overhead might be acceptable.

Example embodiments of the present disclosure enable to utilize the additional overhead provided as an enabler for fast, hardware accelerated L2 processing to also improve robustness and/or spectral efficiency of radio transmission. The disclosed example embodiments may be applied with any type of transmitters or receivers, for example both in uplink (LTL) and downlink (DL) directions in a cellular communication system. Applying the example embodiments to uplink transmission may be beneficial for example due to potentially limited CPU and power resources of user equipment (LTE), as well as relatively frequent use of padding when the LTE is allocated more transmission resources than needed for transmitting the amount of data in its transmission buffer.

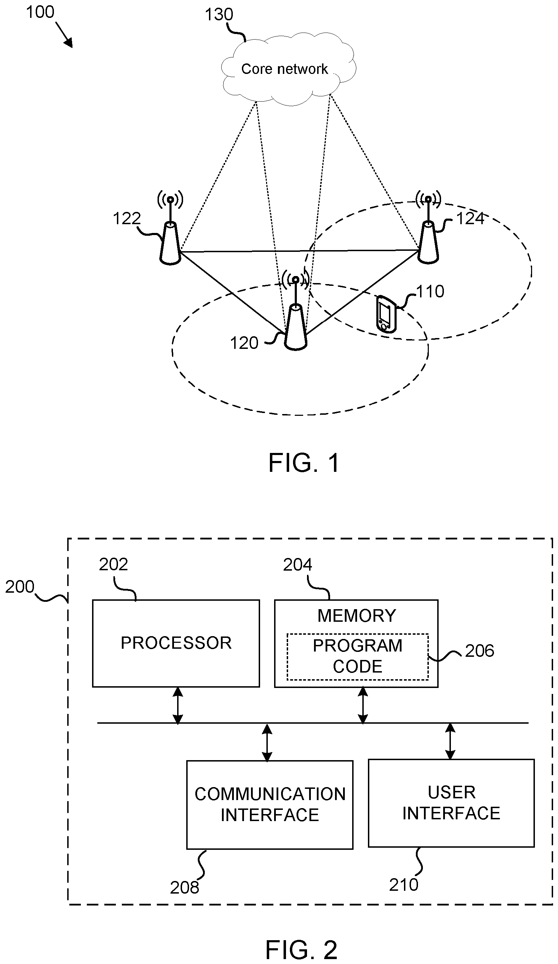

FIG. 1 illustrates an example of a communication network. Communication network 100 may comprise one or more access nodes 120, 122, 124. Access node(s) 120, 122, 124 may be part of a radio access network (RAN) configured to enable an apparatus, represented throughout the description by LTE 110, to access communication services provided by a core network 130. In connection with communication network 100, access node(s) 120, 122, 124 and core network 130 may be collectively referred to as 'network'. UE 110 may be referred to as a user apparatus, a terminal apparatus, a terminal device, a mobile apparatus, or the like. UE 110 may be configured to communicate with access node(s) 120, 122, 124 over a radio interface, which may be also referred to as an air interface. Access nodes 120, 22, 124 may be also referred to as network devices. A terminal device may comprise a device to which a connection from a communication network is terminated.

The radio interface may be configured for example based on the 5G NR (New Radio) standard defined by the 3^{rd} Generation Partnership Project (3GPP), or any future standard or technology (e.g., 6G). Access nodes 120, 122, 124 may for example comprise 5^{th} generation access nodes (gNB). Transmission by an access node to LTE 110 may be called downlink (DL) transmission. Transmission by LTE 110 to an access node may be called uplink (UL) transmission. UE 110 may be therefore configured to operate as a transmitter for uplink transmissions and as a receiver for downlink transmissions. Access node(s) 120, 122, 124 may be configured to operate as a receiver for uplink transmissions and as a transmitter for downlink transmissions. Communication network 100 may comprise a wireless communication network or a mobile communication network, such as for example a cellular communication network.

Core network 130 may be implemented with various network functions (NF), including, for example, one or more user plane functions (UPF) and one or more access and mobility management functions (AMF). A UPF may be configured to handle user data part of a communication session. A UPF may thus provide an interconnect point between the radio access network and a data network configured to provide application services to UE 110 via core network 130 and the radio access network. For example, a UPF may be configured to handle encapsulation and decapsulation of user plane protocol(s), such as the GPRS (general packet radio service) tunnelling protocol for the user plane (GTP-U). An AMF may be configured to receive connection and session request related data from LTE 110 (via an access node). An AMF may be configured to control connection and mobility management in the wireless communication network.

Communication network 100 may comprise other network function(s), network device(s), or protocol(s), in addition, or alternative to, those illustrated in FIG. 1. For example, example embodiments of the present disclosure may be at least partially implemented by a network function or network device of core network 130. A network device may be configured to implement functionality of one or more network functions. Even though some embodiments have been described in the context of 5G, it is appreciated that embodiments of the present disclosure are not limited to this example network. Example embodiments may be therefore applied in any present or future communication networks. An apparatus, such as for example LTE 110 or access node 120, may comprise, or be configured to implement, e.g. by means of software, one or more of the protocol layers described herein.

FIG. 2 illustrates an example of an apparatus configured to practice one or more example embodiments. Apparatus 200 may comprise UE 110, access node 120, 122, 124, an access point, a base station, a radio network node, or a split portion thereof, a network device, a terminal device, or in general any apparatus configured to implement functionality described herein. Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The memory 204 may be configured to store, for example, computer program code or the like, for example operating system software and application software. Memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 204 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 200 may further comprise a communication interface 208 configured to enable apparatus 200 to transmit and/or receive information. Communication interface 208 may comprise an external communication interface, such as for example a radio interface between UE 110 and access node(s) 120, 122, 124. Communication interface 208 may comprise one or more radio transmitters or receivers, which may be coupled to one or more antennas or apparatus 200, or be configured to be coupled to one or more antennas external to apparatus 200.

Apparatus 200 may further comprise other components and/or functions such as a user interface (not shown) comprising at least one input device and/or at least one output device. The input device may take various forms such a keyboard, a touch screen, or one or more embedded control buttons. The output device may for example comprise a display, a speaker, or the like.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), or the like.

Apparatus 200 may be configured to perform, or cause performance of, method(s) described herein or comprise means for performing method(s) described herein. In one example, the means comprises the at least one processor 202, the at least one memory 204 including instructions (e.g., program code 206) configured to, when executed by the at least one processor 202, cause apparatus 300 to perform the method(s). In general, computer program instructions may be executed on means providing generic processing functions. Such means may be embedded for example in a personal computer, a smart phone, a network device, or the like. The method(s) may be thus computer-implemented, for example based algorithm(s) executable by the generic processing functions, an example of which is the at least one processor 202. The means may comprise transmission or reception means, for example one or more radio transmitters or receivers, which may be coupled or be configured to be coupled to one or more antennas. Apparatus 200 may comprise, for example, a network device, for example, an access node, an access point, a base station, or a central/distributed unit thereof. Although apparatus 200 is illustrated as a single device, it is appreciated that, wherever applicable, functions of apparatus 200 may be distributed to a plurality of devices.

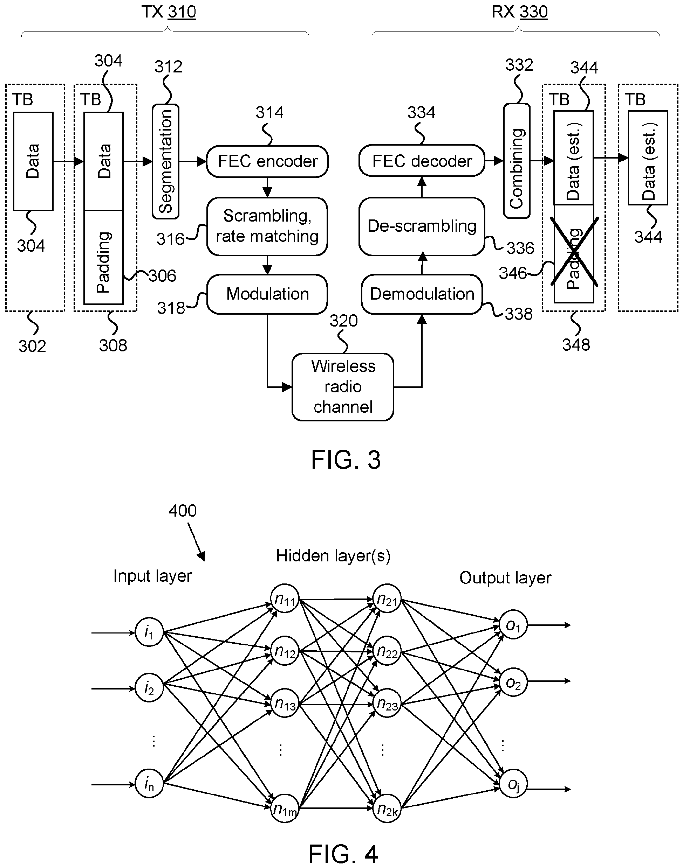

FIG. 3 illustrates an example of padding-based transmission of a transport block. In some communication systems, such as for example the 3GPP 5G New Radio (NR) system, the size of a transport block (TB) may be configured by the network. The size of a TB configured by the network may be referred to as a designated size. Size of transport blocks may be configured to vary from transport block to another or the size of a transport block may be the same as the size of another transport block. Transmitter 310, e.g., LTE 110, may be configured to pad at least some transport blocks with dummy information bits (e.g., zeroes). For example, transmitter 310 may be configured to append data 304 of a transport block 302 with padding data 306, to obtain a padded transport block 308. Transmitter 310 may be configured to use padding to cause transport block 302 to have a designated size. Transmitter 310 may be configured to perform segmentation 312 of padded transport block 308 into forward error correction (FEC) code blocks (CB). FEC encoder 314, for example by a low-density parity check (LDPC) encoder, may be configured to encode the padded and segmented, transport block 308, in order to obtain FEC-encoded data. Note that the FEC code blocks might have different entropies, because at least the last code block of a transport block might contain dummy padding bits.

Transmitter 310 may be configured to perform scrambling 316 of the FEC-encoded data to randomize its binary content. Transmitter 310 may be further configured to perform rate matching 316, for example to adapt the output data rate of FEC encoder 314 to match the available time-frequency resources allocated for transmitter 310, for example time-frequency resource of the physical downlink shared channel (PDSCH).

Transmitter 310 may be configured to perform modulation 318 of the FEC-encoded data, for example to transform binary representation of the FEC-encoded data to complex-valued modulation symbols carrying the FEC-encoded transport blocks in a radio signal.

Transmitter 310 may be configured to transmit the radio signal over wireless radio channel 320 to receiver 330 (e.g., access node 120), which may be configured to receive a channel-corrupted version of padded transport block 308 within the radio signal. Receiver 330 may be configured to perform demodulation 338 in order to obtain demodulated data, in this example demodulated data of padded transport block 308. Demodulation 338 may comprise demodulation of received modulation symbols carrying padded transport block 308.

Receiver 330 may be configured to perform descrambling 336 of the demodulated data to reconstruct a non-randomized version of padded transport block 308. FEC decoder 334 may be configured to decode the demodulated data, for example to correct errors occurring at wireless radio channel 320. Receiver 330 may be configured to perform combining 332 of code blocks of the FEC-decoded data to obtain an estimate 348 of padded transport block 308, comprising the FEC-decoded data as an estimate 344 of data 304 of transport block 302. Padding 346, that is, data corresponding to padding 306, may be discarded by receiver 330 to output the estimate 344 of data 304 of transport block 302.

Coding and decoding dummy bits may be inefficient both in terms of computational and spectral resources. For example, padding data 306 may be processed similar to the information bits of the transport blocks, e.g., FEC encoded and modulated by transmitter 310 and demodulated and FEC decoded by receiver 330, only to get discarded at receiver 330. Example embodiments of the present disclosure provide methods for adapting transport blocks, for example to code blocks, such that dummy padding is avoided, thereby accounting for the ever-increasing demand for higher data-rates in future communication systems.

FIG. 4 illustrates an example of a neural network. Neural network 400 may be configured to perform a particular task, for example to determine encoded or decoded representations of data. Neural network 400 may comprise an input layer, one or more hidden layers, and an output layer. Nodes of the input layer, *i*₁ to *i*ₙ, may be connected to one or more of the *m* nodes of the first hidden layer, *n*₁₁ to *n*₁ₘ. Nodes of the first hidden layer may be connected to one or more of the k nodes of the second hidden layer, *n*₂₁ to *n*₂ₖ. It is appreciated that even though the example neural network of FIG. 4 illustrates two hidden layers, a neural network may apply any number and any type of hidden layers. Neural network 400 may further comprise an output layer. Nodes of the last hidden layer, in the example of FIG. 4 the nodes of second hidden layer, may be connected to one or more nodes of the output layer, *o*₁ to *o*ⱼ. It is noted that the number of nodes may be different for each layer of the network. A node may be also referred to as a neuron, a computation unit, or an elementary computation unit. Terms neural network and model may be used interchangeably. Weights of the neural network may be referred to as learnable parameters, trainable parameters, or simply as parameters. In the example of FIG. 4, one or more of the layers may be fully connected layers, for example layers where each node is connected to every node of a previous layer.

Two example architectures of neural networks include feed-forward and recurrent architectures. Feed-forward neural networks are such that there is no feedback loop. Each layer takes input from one or more previous layers and provides its output as the input for one or more of the subsequent layers. Also, units inside certain layers may take input from units in one or more of preceding layers and provide output to one or more of following layers. In recurrent neural networks there is a feedback loop from one or more nodes of one or more previous layers. This causes the network to become stateful. For example, the network may be able to memorize information or a state.

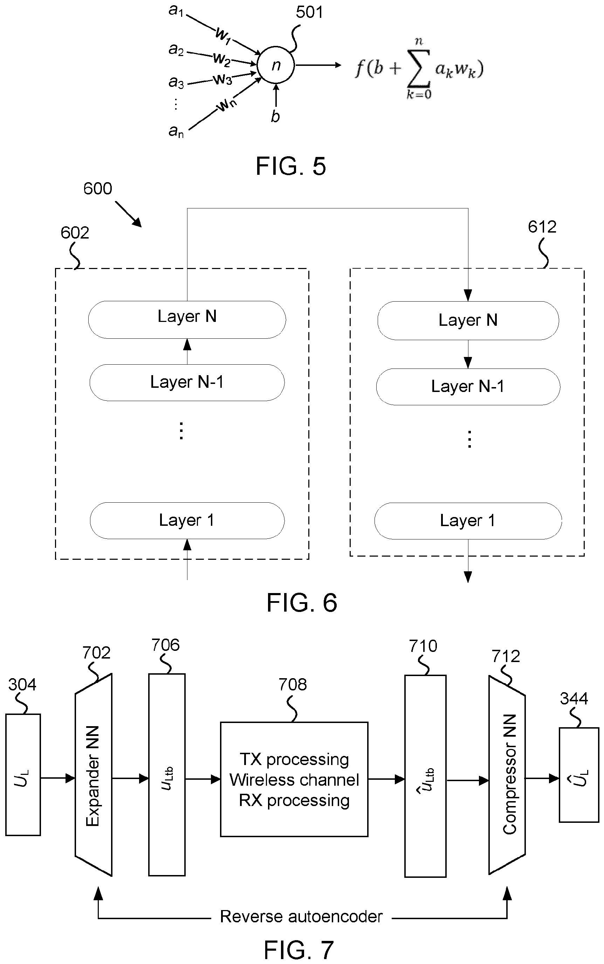

FIG. 5 illustrates an example of an elementary computation unit, according to an example embodiment. The elementary computation unit may comprise a node 501, which may be configured to receive one or more inputs, *a*₁ to *aₙ*, from one or more nodes of one or more previous layers and compute an output based on the input values received. Node 501 may be also configured to receive feedback from one or more nodes of one or more subsequent layers. Inputs may be associated with parameters to adjust the influence of a particular input to the output. For example weights *w*₁ to *wₙ* associated with the inputs *a*₁ to *aₙ* may be used to multiply the input values *a*₁ to *aₙ.* Node 501 may be further configured combine the inputs to an output, or an activation. For example, node 501 may be configured to sum the modified input values. A bias or offset b may be also applied to add a constant to the combination of modified inputs. Weights and biases may be learnable parameters. For example, when the neural network is trained for a particular task, the values of the weights and biases associated with different inputs and different nodes may be updated such that an error associated with performing the task is reduced to an acceptable level.

Furthermore, an activation function *f*() may be applied to control when and how node 501 provides the output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass may comprise feeding a set of input data through the layers of neural network 400 and producing an output. During this process the weights and biases of the neural network 400 affect the activations of individual nodes and thereby the output provided by the output layer.

One property of neural networks is that they are able to learn properties from input data, for example in supervised way or in unsupervised way. In general, a training algorithm may include changing some properties of a neural network such that its output becomes as close as possible to a desired output. Training may be performed based on minimizing or decreasing the output's error, also referred to as the loss.

During training the output generated by the neural network may be compared to a desired output, for example ground-truth data provided for training purposes, to compute an error value. The error may be calculated based on a loss function. Updating the neural network may be then based on calculating a derivative with respect to learnable parameters of the network. This may be done for example using a backpropagation algorithm that determines gradients for each layer starting from the final layer of the network until gradients for the learnable parameters have been obtained. Parameters of each layer are updated accordingly such that the loss is iteratively decreased. Examples of losses include mean squared error, cross-entropy, or the like. In deep learning, training may comprise an iterative process, where at each iteration the algorithm modifies parameters of the neural network to make a gradual improvement of the network's output, that is, to gradually decrease the loss.

Training phase of the neural network may be ended after reaching an acceptable error level. In inference phase, the trained neural network may be applied for a particular task, for example, to expansion and/or compression of data of transport blocks to cause the data of transport blocks to have designated size(s) in transmission. Data of a transport block may refer to data included in a transport block or data to be included in a transport block.

FIG. 6 illustrates an example of a reverse auto-encoder neural network. An auto-encoder is a neural network comprising an encoder neural network 602, which may be generally configured to compress data, and a decoder network 612, which takes the compressed data (e.g., the data output by encoder network 602) and outputs a reconstruction of the original data, possibly with some loss. In case of a reverse autoencoder (RAE) neural network, encoder neural network 602 may be configured to determine an expanded representation of its input data and decoder neural network 612 may be configured to reconstruct the input data, that is, the non-expanded version of the data. The data may be processed by respective layers 1 to A both at the encoder and decoder.

Reverse auto-encoder 600 may be trained based on a training dataset. For each training iteration, a subset of data may be sampled from the training dataset and input to encoder network 602. The output of the encoder neural network 602 is input to decoder neural network 612, which tries to reconstruct the original data provided as input to encoder neural network 602. The reconstructed data may however differ from the original input data. The difference between the input data and the reconstructed data may be referred to as the loss. A loss or error value may be generally computed by comparing the output of the decoder neural network 612 to the input of encoder neural network 602. However, various example embodiments for training reverse auto-encoder 600 are described herein, for example related to distributed training scenarios, where different devices are configured to train and/or use encoder neural network 602 and decoder neural network 612. The loss value may be computed, for example, based on a mean-squared error (MSE) loss function. In general, a plurality of losses may be computed and then added together, for example, via a linear combination (weighted average) to obtain a combined loss. The loss value may be then differentiated with respect to the weights and/or other parameters of encoder neural network 602 and decoder neural network 612. Differentiation may be done for example based on backpropagation, as described above. The obtained gradients may then be used to update or change the parameters, e.g., weights, for example based on the stochastic gradient descent algorithm or any other suitable algorithm. This process may be iterated until a stopping criterion (e.g. acceptable error level) is met. As a result, reverse auto-encoder 600 is trained to expand input data and to reconstruct the original data from the expanded representation. Reverse auto-encoder 600 may be further trained for specific transmission parameters, radio channel conditions, or the like, as will be further described below.

FIG. 7 illustrates an example of a transmission chain with expansion and compression of data of transport block(s) based on a reverse autoencoder neural network. Reverse autoencoder based expansion of data of transport blocks may be used to increase spectral efficiency and robustness of transmission, for example against impairments caused by wireless radio channel 320.

Expander neural network (NN) 702 may be configured receive a bit stream *U_{L}* comprising data 304 of a transport block 302, where *L* denotes length of data 304, e.g., a binary vector. Note that *L* may be dynamically variable because the size of data 304 may be different for different transport blocks. Expander neural network 702 may be an encoder of a reverse autoencoder neural network, for example encoder neural network 602 of reverse autoencoder 600. Expander neural network 702 may be configured with a parallel input or a sequential input. In case of parallel input, data 304 may be input to all inputs or a subset of inputs of expander neural network 702, depending on the size of data 304. In case of a sequential input, expander neural network may be configured to sequentially take in data 304 with different sizes.

Expander neural network 702 may be configured, e.g., by training, to convert bit stream *U_{L}* comprising data 304 into another bit stream *u_{Ltb}* 706 comprising data of length *Ltb* (e.g., data of a transport block), where *Ltb* > *L.* The target length *Ltb* may be configured by the network, e.g., by access node 120, for example as a fixed size allocation of time-frequency resources for transmission of at least one transport block. The target length may be referred to as a designated size.

Expander neural network 702 comprise any suitable type of neural network, for example a deep neural network (DNN), a convolutional neural network (CNN), a recursive neural network (RNN), a residual neural network (ResNet) or a transformer neural network. Expander neural network 702 may be configured with a binary activation function.

The output 706 of expander neural network 702 may be provided, e.g., over a transmission chain 708 comprising TX processing (e.g., FEC encoding 314, scrambling and/or rate adaptation 316, or modulation 318), wireless radio channel 320, and RX processing (e.g., demodulation 338, descrambling 336, or FEC decoding 334), to compressor neural network 712, which may be configured to reconstruct the non-expanded data 304 of bit stream *U_{L}.* For example, receiver may be configured to demodulate the received transport block to obtain demodulated data, FEC decode the demodulated data, and provide the FEC decoded data as input data to compressor neural network 712. Receiver 330 may be configured to combine code blocks of the FEC decoded data to obtain a transport block and provide the transport block as the input data to compressor neural network 712.

Compressor neural network 712 may be configured to receive an estimate *û_{Ltb}* 710 of the transmitted bit stream. This bit stream may comprise the expanded representation of data 304. Compressor neural network 712 may be configured to compress the data of the transport block of the received bit stream to reconstruct bitstream *Û_{L}* comprising an estimate 344 of data 304 of the original bit stream *U_{L}.* Compressor neural network 712 may be a decoder of a reverse autoencoder neural network, for example decoder neural network 612 of reverse autoencoder 600. Compressor neural network 712 may comprise any suitable type of neural network (e.g., DNN, CNN, RNN, ResNet, or transformer). Compressor neural network 712 may be implemented with a binary activation function. Note that expander neural network 702 may be configured to be applied to the data of a transport block, in order to cause the data of the transport block to have a designated size in transmission (e.g., size of the transport block granted by access node 120). A next transport block may be configured with another designated size and be subsequently processed by expander neural network 702, a different configuration thereof, or another expander neural network. Alternatively, expander neural network 702 may be configured to be applied to data of a plurality of transport blocks to cause the data to have a designated size (e.g., a designated common size among the plurality of transport blocks) in transmission. Similarly, compressor neural network 712 may be configured to be applied to data having the designated size in a transport block or blocks of data having the designated size (e.g., designated common size) in a plurality of transport blocks.

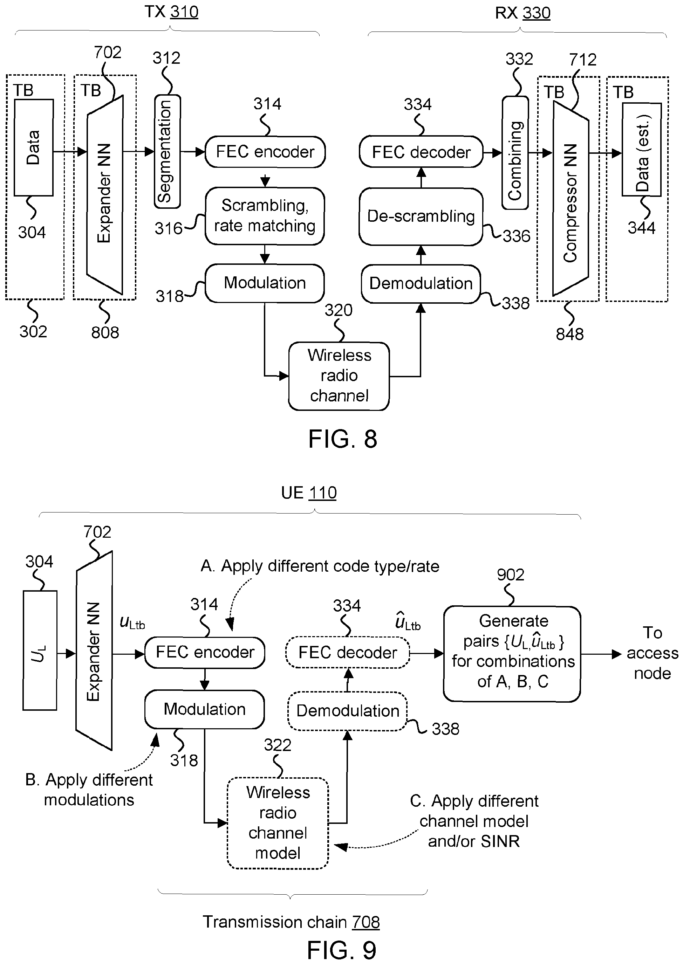

FIG. 8 illustrates an example of expanding and compressing data of transport blocks based on a reverse autoencoder neural network. Transmitter 310 may comprise one or more of the functions or blocks described with reference to FIG. 3, for example segmentation 312, FEC encoding 314, scrambling and/or rate matching 316, or modulation 318. Even though some operations are described as being performed by transmitter 310 or receiver 300 it is understood that similar functionality may be configured to be performed, at least partially, by a component or subsystem of transmitter 310, such as for example an integrated circuit (IC).

Transmitter 310 may be configured to receive data 304 for transmission in a transport block 302. As noted above, data 304 of different transport blocks 302 may have different sizes. For example, length of data 304 may be different for different transport blocks 302. Instead of appending dummy padding to data 304 of transport block 302, expander neural network 702 may be configured to expand data 304 such that data of transport block 808 output by expander neural network 702 has a designated size. A transport block may be a layer 2 transport block, for example a MAC transport block. It is however noted that example embodiments described herein may be applied to block wise transmission of data at any protocol layer.

Transmitter 310 may be configured to determine, by expander neural network 702, an expanded representation of data 304 of transport block 302 to cause data 304 in transport block 808to have the designated size in transmission. The designated size may be determined and configured by the network, for example access node 120. When UE 110 is configured to operate as transmitter 310, access node 120 may be configured to transmit an indication of the designated size for data 304 to LTE 110.

Expander neural network 702 may be configured to process transport blocks 302 regardless of the size of their data 304, e.g., also transport blocks 302, where data 304 already has the designated size at the input of expander neural network 702. In this case, expander neural network 702, together with compressor neural network 712, may operate as an additional FEC layer, thereby improving transmission robustness. Expander neural network 702 may be therefore configured to operate as an additional FEC encoder.

Alternatively, expander neural network 702 may be configured to process transport blocks 302, where data 304 has a size smaller than the designated size and not to process transport blocks 302, where data 304 already has a size equal to the designated size at the input of expander neural network 702. This reduces processing power and the need for computational resources.

The output of expander neural network 702 may be dimensioned according to the designated size of data 304. For example, the output layer of expander neural network 702 may be configured to have a number of output nodes (cf., nodes *o*₁ to *o*ⱼ of FIG. 4) corresponding to the designated size of data 304. Transmitter 310 may be configured to adjust the output dimension of expander neural network 702 based on the designated size, for example by selecting one of a plurality of expander neural networks 702 based on the designated size or the designated size belonging to a range of designated sizes.

Receiver 330 may be configured to receive transport block 808, where the data has the designated size due to the expanded representation of data 304 in transport block 808. Receiver 310 may be configured to apply any suitable RX processing to determine the transport block from the signal received over wireless radio channel 320, for example demodulation 338, de-scrambling, FEC decoding 334, and/or combining 334.

Receiver 330 may be configured to determine, by compressor neural network 712, a compressed representation for the data that was expanded at transmitter 310. Compressor neural network 712 may be generally configured to process any transport block, because data received in the transport blocks have the designated size. Alternatively, compressor neural network 712 may be configured to process transport blocks, whose data is indicated by transmitter 310 to have been expanded by expander neural network 702. Such indication, e.g., the amount of expanded data being non-zero, might be provided as out-of-band signalling, as will be further described below.

Training of expander neural network 702 and compressor neural network 712 will be further described below, but it is noted that training them as parts of the same reverse autoencoder network, with a loss function that considers also the output size, causes the expanded representation of a transport block to convey information also on the non-expanded size of the transport block.

Receiver 330 may be configured to output a compressed representation of the received expanded representation 848 as an estimate 344 of data 304.

The input of compressor neural network 712 may be dimensioned according to the designated size of data 304. For example, the input layer of compressor neural network 712 may be configured to have a number of input nodes (cf., nodes *i*₁ to *i*ₙ of FIG. 4) corresponding to the designated size of data 304. Receiver 330 may be configured to adjust the input dimension of compressor neural network 702 based on the designated size, for example by selecting one of a plurality of compressor neural networks 712 based on the designated size, or the designated size belonging to a range of sizes. When UE 110 is configured to operate as receiver 330, access node 120 may be configured to transmit an indication of the designated size of data 304 to LTE 110.

The reverse autoencoder based expansion and compression of transport blocks may be beneficial for example in uplink communication, where padding may be more likely to occur and where the amount of padding may be significant. In this case, expander neural network 702 would reside at UE 110 and compressor neural network 712 would reside at access node 120. Note that it is also possible to apply the same solution to downlink communications from access node 120 to LTE 110, where expander neural network 702 would reside at access node 120 and compressor neural network 712 would reside at UE 110, or to sidelink communications between two LTEs.

Expander neural network 702 may be trained to expand data 304 of transport block 302 such that the expansion not only results in the designated size but also the robustness against channel errors is improved. Expanded representation(s) of the data of transport blocks enable transmitter to still apply same L1 processing procedures, for example code block segmentation. Compressor neural network 712 may be configured to reconstruct the original data 304 of transport block 302, for example from bits computed by FEC decoder 334. Hence, the expanded transport block bit stream (*u_{Ltb}*) contains information derived from original transport block data 304 only and dummy padding is avoided. Note that while the total number of transmitted bits is the same, in case of the reverse autoencoder based expansion and compression the bits that would be otherwise discarded as padding are used to increase the transmission robustness.

Expander neural network 702 and compressor neural network 712 may be trained in tandem, for example using one of the following strategies: joint training by single entity, joint training by different entities, or separate training.

*Joint training by single entity.* In this example, a single entity (e.g., access node 120, a network device of core network 130, or receiver 330) is configured to train the coupled reverse autoencoder structure comprising both expander neural network 702 and compressor neural network 712. After training, different parts of the reverse autoencoder may be transferred to users of the respective parts. For example, the entity may be configured to transfer expander neural network 702 to transmitter 310 (e.g., LTE 110), for example by transmitting trained parameters of expander neural network 702. Alternatively, or additionally, the entity may be configured to transfer compressor neural network 712 to receiver 310 (e.g., access node 120), for example by transmitting trained parameters of compressor neural network 712. In case of joint training by a single entity, the entity may be configured to generate or collect training data samples *U_{L}* and to train both parts of the reverse autoencoder such that a distance (e.g., bit error rate, BER) between *U_{L}* and *Û_{L}* is sufficiently low or minimized, e.g., based on a loss function *l*(*U_{L}, Û_{L}*)*.*

*Joint training by different entities:* In this example, different entities, e.g., UE 110 and either access node 120 or a network device of core network 130, are configured to collaboratively train the coupled reverse autoencoder structure. A first entity, e.g., UE 110, may comprise expander neural network 702. A second entity, e.g., access node 120 or a network device of core network 130, may comprise compressor neural network 712. The first entity may be configured to transmit training data to the second entity. The training data may comprise inputs (*IN*) and outputs (*OUT*) of expander neural network 702 (*IN* = *U_{L}*, *OUT* = *u_{Ltb}*) during the training phase. The second entity may be configured to pass the output data of expander neural network 702 through its compressor neural network 712 to obtain estimate (*Û_{L}*) of the input of expander neural network 702. The second entity may be configured to compare the output of compressor neural network 712 (*Û_{L}*) to the input of expander neural network 702 (*U_{L}*)*.* For example, the second entity may be configured to evaluate the loss function *l*(*U_{L}, Û_{L}*)*.* The second entity may be configured to update parameters of compressor neural network 712, for example by backpropagation of gradients of the loss function. The second entity may be configured to transfer the gradients from the first layer of compressor neural network 712 to the first entity, which may be configured to continue the backpropagation of gradients through expander neural network 702. This way both expander neural network 702 and compressor neural network 712 get jointly trained by different entities.

*Separate training:* In this example each of the different entities is configured to train its own part of the reverse autoencoder without propagation of the training data through the actual expander-compressor chain.

If the first entity (e.g., transmitter 310 or LTE 110) is configured to train first, the first entity may be configured to generate a training data set (*IN* = *U_{L}*, *OUT* = *u_{Ltb}*)*.* To train expander neural network 702, the first entity may use a nominal compressor neural network, which may be matched to the actual compressor neural network 712 of the reverse autoencoder. The nominal compressor neural network may be generated by the first entity, be preconfigured at the first entity, or received by the first entity over a communication interface, for example from the second entity. The nominal compressor network may be configured to resemble the actual compressor neural network 712 of the reverse autoencoder, for example in terms of the structure of the neural network, number or type of layers, or number of nodes of the layers. For example, the input of nominal compressor neural network may be dimensioned according to the designated size of data 304. The nominal compressor neural network may be therefore representative of the decoder of the reverse autoencoder neural network (e.g., compressor neural network 712). The first entity may be configured to train expander neural network 702 based on a loss function *l*(*U_{L}, Û_{L,N}*)*,* where *Û_{L,N}* is the output of the nominal compressor neural network.

The first entity may be configured to use the nominal compressor neural network only for training and not for inference. The first entity may be configured to transfer the training data (e.g., *IN* = *U_{L}*, *OUT* = *u_{Ltb}*) used for training expander neural network 702 to the second entity (e.g., receiver 330, access node 120 or a network device of core network 130) for training compressor neural network 712. The training data may comprise pairs of input and output training data of expander neural network 702. The second entity may be configured to train compressor neural network 712 based on the training data received from the first entity, for example based on inverting the input (*IN*) and output (*OUT*)*,* resulting in *IN* = *u_{Ltb}, OUT* = *U_{L}* for training compressor neural network 712.

If the second entity is configured to train first, the second entity may be configured to generate a training data set (*IN* = *û_{Ltb}* , *OUT* = *Û_{L}*)*.* To train compressor neural network 712, the second entity may use a nominal expander neural network, which may be matched to the actual expander neural network 702 of the reverse autoencoder. The nominal expander neural network may be generated by the second entity, be preconfigured at the second entity, or received by the second entity over a communication interface, for example from the first entity. The nominal expander network may be configured to resemble the actual expander neural network 702 provided at the first entity, for example in terms of the structure of the neural network, the number or type of layers, or number of nodes of the layers. For example, the output of expander neural network 702 may be dimensioned according to the designated size of data 304.The nominal expander neural network may be therefore representative of the encoder of the reverse autoencoder neural network (e.g., expander neural network 702). The second entity may be configured to train expander neural network 702 based on a loss function *I*(*U_{L,N}, Û_{L}*)*,* where *U_{L,N}* is the input of nominal expander neural network.

The second entity may be configured to use the nominal expander neural network only for training and not for inference. The second entity may be configured to transfer the training data (e.g., *IN* = *û_{Ltb} , OUT* = *Û_{L}*) used for training compressor neural network 712 to the first entity for training expander neural network 702. The training data may comprise pairs of input and output training data of compressor neural network 712. The first entity may be configured to train expander neural network 702 based on the training data received from the second entity, for example based on inverting the input (*IN*) and output (*OUT*)*,* resulting in *IN* = *Û_{L}, OUT* = *û_{Ltb}* for training expander neural network 702. The order of training between the two entities may be configured by exchange of signalling information between the entities.

Expander neural network 702 and compressor neural network 712 may be therefore jointly trained, either by a single entity or by different entities. Joint training may comprise end-to-end training of the reverse autoencoder, using the actual expander and compressor neural networks of the reverse autoencoder. In separate training, each of the different entities may be configured to train one part of the reverse autoencoder. For example, the first entity may be configured to train a first part of the reverse autoencoder using a nominal version of a second part of the reverse autoencoder. The second entity may be configured to train the second part of the reverse autoencoder based on training data received from the first entity, as described above. The first entity may be transmitter 310, for example UE 110. The second entity may be receiver 330, for example access node 120 or a network device of core network 130 configured to communicate with UE 110 via access node 120.

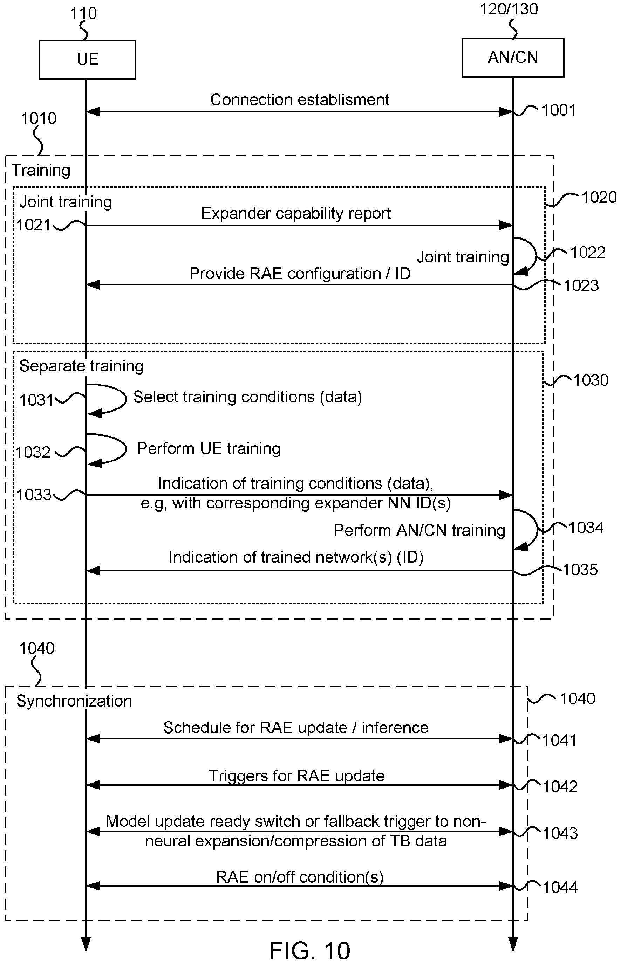

Different transmission parameter configurations and radio channel conditions may be taken into account in any of the training scenarios. For example, expander neural network 702 and/or compressor neural network 712 may be trained for different types of modulations or different orders of modulation, for example different types of constellations with different numbers of constellation points, different types or code rates of FEC coding, different transport block sizes, or in general any parameters or configurations associated with TX and/or RX processing of transmission chain 708. Expander neural network 702 and/or compressor neural network 712 may be trained for different radio channel conditions (e.g., signal-to-interference-plus-noise ratio, delay spread, or Doppler spread) using a simulated radio channel model. This way errors expected due to signal propagation over wireless radio channel 320 can be purposely introduced in the expanded representation *u_{Ltb}* of data 304. Based on this approach compressor neural network 712 may be trained to correct the errors. For example, instead of transferring the ideal pairs (*U_{L}, u_{Ltb}*)*,* transmitter 310 may be configured to transfer pairs (*U_{L}, û_{Ltb}* ) to receiver 330. In this case *û_{Ltb}* approximates *u_{Ltb}* because of imperfect reception. An example of training expander neural network 702 by UE 110 for different transmission parameters and channel conditions is described with reference to FIG. 9. It is however noted that similar approach may be used by other type of transmitters 310. It is also possible to train (e.g., by receiver 330, access node 120, or a network device of core network 130) decompressor neural network 712 first with the simulated transmission chain and to provide the associated training data to another entity (e.g., transmitter 310 or UE 110) for training corresponding expander neural network 702. Upon completion of the training the expander and compressor neural networks, they may be deployed at different devices, activated, and periodically updated. Examples of signalling configured to enable this functionality are described with reference to FIG. 10. It is also noted that a single entity might be configured to train both expander neural network 702 and compressor neural network 712 for different transmission parameters or radio channel conditions.

Regardless of the training scenario, the entity performing the training may be configured to apply a loss function to compare the actual output of the trained neural network, or part of it, to the desired output. Depending on the training scenario, the desired output may comprise the training input data of expander neural network 702 or the nominal expander neural network. Suitable loss functions include, but are not limited to, the binary cross-entropy function or the mean squared error (MSE), or the like. To cope with dynamically variable length of *U_{L}* a transformer based expander neural network 702 may be applied. Alternatively, any other type of attention neural network may be used. It is also possible to pad the input training data to the designated size of data 304 during the training phase and provide an indication of the padded positions to expander neural network 702 as an auxiliary input. Expander neural network 702 may be configured to mask the respective positions and not to attend to the padded positions.

When jointly training expander neural network 702 with compressor neural network 712, either by a single entity or different entities, the loss function may be configured to compare similarity of data of transport blocks at the input of expander neural network 702 and at the output of compressor neural network 712. The loss function may be further configured to compare size of data 304 at the input of expander neural network 702 to size of estimate 344 of data 304 at the output of compressor neural network 712. This enables compressor neural network 712 to be trained to output data having a size corresponding to data 304.

When separately training expander neural network 702, the loss function may be configured to compare similarity of data of transport block 302 at the input of expander neural network 702 and data at the output of the nominal compressor neural network. The loss function may be further configured to compare size of data 304 at the input of expander neural network 702 to size of the data at the output of nominal compressor neural network. This enables expander neural network 702 to be trained to include information on the size of the expanded representation of data 304 in transport block 808.

When separately training compressor neural network 712, the loss function may be configured to compare similarity of data of transport blocks at the input of the nominal expander neural network and at the output of compressor neural network 712. The loss function may be further configured to compare size of data 304 at the input of the nominal expander neural network to size of estimate 344 of data 304 at the output of compressor neural network 712. This enables compressor neural network 712 to be trained to output data having a size corresponding to data 304 based on the expanded representation of data 304 included in transport block 808.

Transmitter 310 and receiver 330 may be part of a system configured to communicate data 302 over a transmission medium, for example wireless radio channel 320. The system may comprise: transmitter 310 comprising expander neural network 702; and receiver 330 comprising compressor neural network 712. Transmitter 310 and/or receiver 330 may comprise further functionality described herein, such as one or more of the other blocks of transmission chain 708.

FIG. 9 illustrates an example of training expander neural network(s) and signalling training data to an apparatus configured to train respective compressor neural network(s). UE 110 may be configured to determine, by expander neural network 702, bit stream *u_{Ltb}* comprising the expanded representation of data 304 (*U_{L}*) of a transport block, as described above. LTE 110 may be configured to perform one or more of the following operations (*A, B, C*) of transmission chain 708 to train different expander neural networks, or configurations (e.g., versions) thereof, for different transmission parameters or conditions of wireless radio channel model 322.

For example, LTE 110 may be configured to determine a plurality of parameter sets (e.g., weights or other learnable parameters) for expander neural network 702, corresponding to different configurations of expander neural network 702. Different parameter sets may correspond to different combinations of transmission parameters and/or radio channel conditions. Transmission chain 708 may be provided between expander neural network 702 and a nominal compressor neural network. In case of joint training, transmission chain 708 may be provided between expander neural network 702 and compressor neural network 712.

Transmission chain 708 may be simulated by UE 110. For example, UE 110 may be configured to use actual FEC encoder 314 and/or modulation 318 with a simulated wireless radio channel model 322 and simulated demodulation 338 and FEC decoder 334. UE 110 may be configured to provide the output of FEC decoder 334 (*û_{Ltb}*)*,* optionally with some post-processing such as combining 332, as input data to the nominal compressor neural network to obtain the estimate (*Û_{L}*) of the input data (*U_{L}*) of expander neural network 702.

At operation 902, LTE 110 may be configured to generate pairs of input and output training data ( *U_{L} , û_{Ltb}* ) for different combinations of parameters associated with operations A to C. UE 110 may be configured to transfer these pairs to access node 120, or in general to another entity configured to train compressor neural network 712.

*A. Applying different code types of code rates:* UE 110 may be configured to perform training of expander neural network 702, for example with a nominal compressor neural network. UE 110 may be configured to train different expander neural networks 702, or configurations thereof, by changing parameter(s) of FEC encoding 314 and FEC decoding 334 after having performed training for particular parameter(s) of FEC encoding and decoding. UE 110 may be therefore configured to train expander neural network 702 with transmission chain 708 comprising FEC encoding and decoding with particular code type(s) (e.g., LDPC, turbo code, polar code) or code rate(s) (e.g., from range 1/3 to 8/9). LTE 110 may be configured to keep the same wireless radio channel model 322 and other transmission parameter(s) (e.g., modulation parameters) when training expander neural network 702 for different FEC encoding and decoding parameters.

*B. Applying different types or orders of modulation:* UE 110 may be configured to train different expander neural networks 702, or configurations thereof, by changing parameter(s) of modulation 318 and demodulation 338 after having performed training for particular parameter(s) of modulation 314 and demodulation 338. LTE 110 may be configured to train expander neural network 702 with transmission chain 708 comprising modulation and demodulation with particular modulation type(s) (e.g., quadrature amplitude modulation (QAM), phase shift keying (PSK)) or modulation order(s) (e.g., with 4, 16, 64, or 256 constellation points). Modulation order may refer to a number of constellation points in the modulation scheme in questions, or in general the number of bits configured to be mapped to a single modulation symbol. A modulation symbol may comprise a complex-valued data symbol configured to carry one or more bits. UE 110 may be configured to keep the same wireless radio channel model 322 and other transmission parameter(s) (e.g., FEC parameters) when training expander neural network 702 for different modulation parameters.

Note that operations *A* and *B* may be performed by training expander neural network 702 by applying different modulation and coding schemes (MCS), where an MCS index defines both the type or rate of FEC coding and the type or order of modulation. The

*C. Applying different channel models or different levels of noise or interference:* LTE 110 may be configured to train different expander neural networks 702, or configurations thereof, by changing parameter(s) of wireless radio channel model 322 after having performed training for particular parameter(s) of wireless radio channel model 322. UE 110 may be configured to train expander neural network 702 with transmission chain 708 comprising wireless radio channel model 322 with designated channel parameter(s), such as for example signal-to-interference-plus noise ratio (SINR), delay spread, or Doppler spread. Delay spread may refer to a time-difference between the direct propagation path and the last propagation path (e.g., channel tap) of wireless radio channel model 322. Doppler spread may refer to the maximum difference between Doppler frequency shifts of the different propagation paths of wireless radio channel model 322. UE 110 may be configured to keep the transmission parameter(s) (e.g., FEC parameters or modulation parameters) when training expander neural network 702 for different wireless radio channel models 322.

The training process may comprise one or more of the following operations:
- LTE 110 may be configured to generate training data (e.g., vectors *U_{L}*)*.*
- LTE 110 may be configured to train expander neural network 702 using a nominal compressor neural network.
- UE 110 may be configured to extract and store the output of expander neural network 702 (e.g., code *u_{Ltb}*) corresponding to the training data (*U_{L}*) provided as input to expander neural network 702 during the training.
- LTE 110 may be configured to transfer pairs of input and output training data (*U_{L}, u_{Ltb}*) to access node 120.
- Access node 120, or in general another entity, may be configured to use the pairs provided by LTE 110 to train compressor neural network 712 using a nominal expander neural network.

When considering different conditions of wireless radio channel model 322, UE may be configured to purposely introduce errors due to radio propagation to code *u_{Ltb}.* This enables to train compressor neural network 702, optionally in combination with FEC decoder 334, to correct the errors. Thus, instead of transferring the perfect pairs (*U_{L},u_{Ltb}*) to access node 120, UE 110 may be configured to transfer pairs (*U_{L}, û_{Ltb}),* where *û_{Ltb}* approximates *u_{Ltb}* because of imperfect reception. For example:
- LTE 110 may be configured to compute bit stream *û_{Ltb}* by passing the output bit stream (*u_{Ltb}*) of expander neural network 702 through a simulated TX processing chain including FEC encoding with variable FEC parameter(s) (e.g., code rates) or modulation with variable modulation parameter(s) (e.g., modulation index (MCS), layer mapping, or the like). UE 110 may be configured to pass the FEC encoded and/or modulated data through wireless radio channel model 322, where the channel type may vary across training data samples (*U_{L}*). UE 110 may be configured to pollute the signal with different levels of additive white Gaussian noise (AWGN) or interference, for example such that the SINR varies within a given range across the training data samples. UE 110 may be configured to perform simulated RX processing of the signal obtained by applying wireless radio channel model 322, for example demodulating and/or FEC decoding the signal to obtain bit stream *û_{Ltb}.* Note that depending on the modulation and/or FEC coding parameters (e.g., MCS index), types of wireless radio channel model 322, SINK levels, etc., the same input training data *U_{L}* may be associated with different estimates (*û_{Ltb}*) of data of the received transport block. Ideally, if there are no errors in transmission, *û_{Ltb}* is equal to *u_{Ltb}.* This ideal case may also be considered as an observation point.
- LTE 110 may be configured to transmit *U_{L}* and *û_{Ltb}* to access node 120, or in general to another entity.
- Access node 120, or the other entity, may be configured to train compressor neural network 712 using the pairs of training data (*U_{L}* and *û_{Ltb}*) received from LTE 110. For example, *û_{Ltb}* may be provided as input training data to compressor neural network 712 and its output may be compared to *U_{L}* to train compressor neural network 712.

Even though operations of FIG. 9 have been described as being performed by UE 110, similar operations may be alternatively performed by another entity, e.g., access node 120 or a network device of core network 130, for example to train compressor neural network 712 with simulated transmission chain 708 and to provide corresponding training data to UE 110 for training expander neural network 702. In this case, the training process comprise one or more of the following operations:
- The other entity may be configured to generate training data (e.g., vectors *U_{L}*).The other entity may be configured to train compressor neural network 712 using a nominal expander neural network.
- The other entity may be configured to extract and store the input (*u_{Ltb}*) and output (*Û_{L}*) of compressor neural network 712 corresponding to the training data (*U_{L}*) provided as input to the nominal expander neural network during the training.
- The other entity may be configured to transfer pairs of input and output training data (*u_{Ltb}, Û_{L}*) to LTE 110.
- UE 110 may be configured to use the pairs provided by the other entity to train expander neural network 712 using a nominal compressor neural network.

Also in this case, the conditions in wireless radio channel 320 may be taken into account. For example:
- The other entity may be configured to compute bit stream *û_{Ltb}* by passing the output bit stream (*u_{Ltb}*) of the nominal expander neural network through the simulated tranmission chain 708, for example as describe above.
- The other entity may be configured to transmit pairs of training data (*U_{L}, û_{Ltb}*) to UE 110.
- UE 110 may be configured to train expander neural network 702 using the pairs of training data (*Û_{L}* and *û_{Ltb}*) received from the other entity, for example using *û_{Ltb}* as input to expander neural network 702 and comparing its output to *U_{L}.*

FIG. 10 illustrates an example of signalling and operations for training a reverse autoencoder for expanding and compressing data of transport blocks. Even though operations of FIG. 10 have been described using UE 110 and access node (AN) 120 or core network 130 as examples of entities configured to perform training of the reverse autoencoder network, it is understood that any type of entities or apparatuses (e.g., transmitter 310 and receiver 330) may be configured to perform similar functions. A network device of core network 130 may be configured to perform the functionality of core network 130 described herein. It is further noted that some of operations 1001 to 1044 may not be performed, or may be performed differently, for example when applying the example embodiments in a non-3GPP context.

In case of a distributed reverse autoencoder, parts of the reverse autoencoder, i.e., expander neural network 702 and compressor neural network 712, may reside in different apparatuses, for example hardware platforms associated with different network entities (e.g., 6G entities). Expander neural network 702 may be configured to perform transport block to code block (TB2CB) expansion, e.g., at UE 110. Compressor neural network 712 may be configured to perform code block to transport block (CB2TB) compression, e.g., at access node 120. It may be therefore desired that the two parts are compatible with each other at different times during deployment of the distributed reverse autoencoder. For example, it may be desired to enable pairing between a LTE-specific expander neural network 702 and a gNB-specific compressor neural network 712, for example to dynamically adapt the reverse autoencoder to achieve a minimum link quality level (e.g., bit error rate, BER, or block error rate, BLER) over a wide-range of radio channel conditions. It may be also desired to enable the pairing regardless of vendors of the respective apparatuses (e.g., UE and/or gNB) that own the respective expander neural network(s) and compressor neural network(s). It may be therefore desired to coordinate the expander and compressor functionalities by the network.

The operations and signalling described with reference to FIG. 10 enable training and/or deployment a distributed reverse autoencoder for expanding and compressing data of transport blocks. The operations and signalling further enable running the distributed reverse autoencoder, e.g., selecting input and output sizes, and handling compatibility aspects between one compressor neural network (e.g., an access node specific compressor) and multiple vendor-specific expander neural networks (e.g., LTE vendor-specific expanders), etc. The operations and signalling further enable synchronizing expander neural network 702 and compressor neural network 712, e.g., updating these two parts of the reverse autoencoder, switching between different versions of them, activating or deactivating them, or the like, for example such that they are tuned to current radio link conditions and data rate needs, e.g., data rate needs of LTE 110.

Note that the training can be online, e.g., coordinated over a running UE-gNB connection, or offline, e.g., pretrained models deployed upon establishment of the UE-gNB connection, for example subject to at least one condition being met. Signalling (e.g., messages) between UE 110 and access node 120 to facilitate online training of the reverse autoencoder may be configured to be transmitted using RAN protocols stacks. In case of offline training, the signalling may be implemented via any other format.

Note that the training assistance data described below may be dynamically indicated, for example in RRC signalling. Alternatively, a more static capability report (e.g., UE capability report) may be used to carry the training assistance data. Alternatively, an operator database may comprise information on UE capabilities of different UEs. For example, UE modem identification may be used to derive the LTE capabilities regarding the reverse autoencoder and/or training data required from UE 110 or the operator database (e.g., a gNB database).

At operation 1001, connection establishment may be performed between LTE 110 and access node (AN) 120 or core network (CN) 130, for example to establish a radio resource control (RRC) connection between UE 110 and access node 120. The connection establishment may further comprise registering and/or authenticating UE 110 at core network 130. In either case, UE 110 may be configured to transmit training assistance data to access node 120 or core network 130 for training at least one part of the reverse autoencoder, as will be further described below.

As described above, training 1010 of the reverse autoencoder may comprise joint training 1020 or separate training 1030.

In case of joint training 1020 by a single entity, in this example access node 120 or core network 130, one entity (e.g., 6G entity such as access node 120) may be configured to train both expander neural network 702 and compressor neural network 712. Training may be performed using synthetic data or field traces.

At operation 1021, UE 110 may be configured to transmit training assistance data to access node 120, for example in an expander capability report. If training is configured to be performed by core network 130, e.g., a network device or network function thereof, access node 120 may be configured to forward the training assistance data to core network 130. Note that if an entity (e.g., UE 110) is configured to deploy compressor neural network 712, that entity may be configured to transmit the training assistance data in a compressor capability report. The expander capability report or the compressor capability report may be transmitted to an entity (e.g., access node 120 or core network 130) configured to perform the joint training of the reverse autoencoder.

The training assistance data may comprise an indication of type(s) of expander neural network(s) or compressor neural network(s) supported by UE 110. Note that LTE 110 may be configured to operate as a transmitter configured to apply expander neural network 702, or, as a receiver configured to apply compressor neural network 712. A type of expander neural network or compressor neural network may refer to supported expander neural network architecture(s) or compressor neural network architecture(s), such as for example DNN, CNN, RNN, ResNet, transformer, or the like. The training assistance data may comprise an indication of a maximum depth (e.g., maximum number of layers) or maximum input size of the expander neural network(s) or compressor neural network(s) supported by UE 110. The type, maximum depth, and/or maximum input size enables access node 120 or core network 130 to select suitable architecture for the reverse autoencoder such that UE 110 is able to deploy part of it after the training.

The training assistance data may comprise an indication of a capability of LTE 110 to support parallel deployments of expander neural networks or compressor neural networks. Parallel deployment of expander neural networks or compressor neural networks may be applied to enable configuration (e.g., updating or re-training) of one deployed instance of the expander neural network or compressor neural network while processing transport blocks with another deployed instance of the expander neural network or compressor neural network. The training assistance data may comprise an indication of a capability of LTE 110 for substantially real-time switching between the parallel deployments of the expander neural networks or compressor neural networks. Substantially real-time switching may refer to switching the instance of expander neural networks or compressor neural network during processing of the transport blocks such that transmission or reception of the transport blocks is not interrupted. Based on the indication of the ability to the substantially real-time switching, access node 120 or core network 130 may configure synchronization 1040 such that it takes into account whether LTE 110 has the ability to the substantially real-time switching or not.

At operation 1022, access node 120 or core network 130 may be configured to perform joint training of expander neural network 702 and compressor neural network 712, for example as described with reference to FIG. 8 or FIG. 9. Access node 120 or core network 130 may therefore obtain the trained configuration(s) of expander neural network 702 and compressor neural network 712, which may be characterized by their trainable parameters, such as for example weights. Note that access node 120 or core network 130 may be configured to train different configurations (e.g., versions) of expander neural network 702 and compressor neural network 712, for example corresponding to different parameters of transmission chain 708 or wireless radio channel model 322. Access node 120 or core network 130 may be configured to assign an identifier (ID) for the trained configuration(s) of expander neural network 702 and/or compressor neural network 712. In case of joint training the parameters of channel model may be known or determined by the entity performing the joint training.

At operation 1023, access node 120 or core network 130 may be configured to transmit the configuration(s) of the expander neural network 702 or compressor neural network 712 to UE 110. The configuration(s) may comprise trained configuration(s) of expander neural network 702 or compressor neural network 712, e.g., configuration(s) resulting from joint training 1022. Access node 120 or core network 130 may be configured to transmit the identifier(s) of the configuration(s) of the expander neural network 702 or the compressor neural network 712, e.g., identifier(s) of their trained configuration(s). This enables subsequent identification of the configuration(s) of expander neural network 702 or compressor neural network 712, for example when coordinating switching between different versions of them. Core network 130 may be configured to perform transmission(s) to UE 110 via access node 120.

UE 110 may be configured to apply the received expander neural network 702 or compressor neural network 712. For example, UE 110 may configure the received expander neural network 702 for expanding data of transport block(s). Alternatively, UE 110 may configure the received compressor neural network 712 for compressing data of transport block(s), when operating as receiver 330.

In case of separate training 1030, training of expander neural network 702 and compressor neural network 712 may be distributed at different entities (e.g., apparatuses) and nominal expander and compressor neural networks may be used instead of passing the training data through the actual expander-compressor chain of the reverse autoencoder. The entities may be however configured to share training data. As discussed above, the separate training may be arranged in any suitable order, for example either LTE 110 training expander neural network 702 first and then access node 120 or core network 130 matching its compressor neural network 702 to expander neural network 702 of UE 110, or vice versa.

At operation 1031, UE 110 may be configured to select training conditions, for example the training data. The training conditions may comprise one or more of the following: the type of radio channel (e.g., wireless radio channel model 322) configured for training expander neural network 702 (or compressor neural network 712) at UE 110, a delay spread or a delay spread range (e.g., minimum and maximum delay spread) of the radio channel, a Doppler spread or a Doppler spread range (e.g., minimum and maximum Doppler spread) of the radio channel, SINR or SINR range (e.g., minimum and maximum SINR) of the radio channel. In case the level of interference is zero, SINR may comprise the signal-to-noise ratio (SNR). The training conditions may comprise type(s) or code rate(s) of FEC coding (e.g., minimum and maximum code rate) or type(s) or order(s) of modulation (e.g., minimum and maximum modulation order). The training conditions may comprise input and output sizes of expander neural network 702 and/or compressor neural network 712, for example minimum and maximum size of transport blocks or code blocks.

At operation 1032, UE 110 may be configured to perform training of its own part of the reverse autoencoder. For example, LTE 110 may be configured to train expander neural network 702 with a nominal compressor neural network. The training may be performed for the selected training conditions. Optionally, different versions or configurations of expander neural network 702 may be trained for different training conditions. Alternatively, LTE 110 may be configured to similarly train compressor neural network 712 with a nominal expander neural network, if UE 110 is configured to operate as receiver 330.

At operation 1033, UE 110 may be configured to transmit training assistance data comprising at least one of the training conditions to access node 120 or core network 130, for example parameters of transmission chain 708. LTE 110 may be configured to transmit the training data, e.g., pairs (*U_{L}, u_{Ltb}*) or (*U_{L}, û_{Ltb}*)*,* to access node 120 or core network 130, for example as part of the training assistance data. UE 110 may be configured to transmit identifier(s) of the trained expander neural network 702, or different configurations thereof. The identifier(s) may be associated with corresponding training condition(s). This enables access node 120 or core network 130 to match corresponding expander and compressor neural networks after training compressor neural network 712, or different configurations thereof, with the training data received from UE 110. Access node 120 or core network 130 may be therefore configured to receive, from LTE 110, an identifier of the trained part of the reverse autoencoder neural network trained with the training data.

At operation 1034, access node 120 or core network 130 may be configured to train, based on the training data received from LTE 110, its own part of the reverse autoencoder, i.e., the part that was not trained by LTE 110 at operation 1032. For example, if UE 110 trained expander neural network 702, access node 120 or core network 130 may be configured to train compressor neural network 712, or vice versa. The part not trained by LTE 110 may be referred to as a non-trained part of the reverse autoencoder. Access node 120 or core network 130 may be configured to assign the identifier of the trained part of the reverse autoencoder neural network, which was received from UE 110, to the non-trained part of the reverse autoencoder neural network in association with training the non-trained part of the reverse autoencoder neural network with the training data. Both parts of the reverse autoencoder may be therefore assigned the same identifier.

At operation 1035, access node 120 or core network 130 may be configured to transmit, to LTE 110, an indication of expander neural network(s) or compressor neural network(s), for which training has been completed. For example, access node 120 or core network 130 may be configured to transmit identifiers of such expander neural network(s) or compressor neural network(s) to LTE 110. UE 110 may be configured to enable expansion or compression of data of transport blocks with expander neural network(s) or compressor neural network(s) corresponding to the received identifier(s).

In general, in case of separate training the entity that trains first may assign an identifier to the training data. This entity may transmit the training data, associated with the assigned identifier, to the other entity. The other entity may train its own part of the reverse autoencoder and assign the same identifier to its own part. For example, if the LTE 110 trains expander neural network 702 first, LTE 110, upon finalizing the training, may generate and assign an identifier for the trained version of expander neural network 702, associate the identifier with the training data, and transfer the training data marked with the identifier to access node 120 or core network 130. Access node 120 or core network 130 may then use the training data to generate a matching compressor neural network 712 and associate (e.g., label) it with the same identifier.

When receiving training data from UEs of different vendors, access node 120 or core network 130 may be configured to train a vendor-agnostic compressor neural network, which may be configured to operate regardless of which vendor-specific expander neural network is used by a particular UE. For example, access node 120 or core network 130 may be configured to train compressor neural network 712 with training data received from the LTEs of different vendors. In this case, access node 120 or core network 130 may be configured to assign a common identifier to compressor neural network 702, where the common identifier is associated with vendor-specific identifiers of the different vendor-specific expander neural networks, or the training data used for training the vendor-specific expander neural networks by the LTEs of different vendors. Access node 120 or core network 130 may be configured to transmit the common identifier to the UEs of different vendors, for example to indicate that the common identifier corresponds to the vendor-specific identifier of a particular UE. Subsequently, access node 120 may be configured to use the common identifier to identify the different vendor-specific expander neural networks, for example when synchronizing the expander and compressor neural networks.

Access node 120 or core network 130 may be configured to transmit to UE 110 a schedule for training expander neural network 702 or compressor neural network 712. This enables to coordinate training of expander neural network 702 and compressor neural network 712. For example, access node 120 or core network 130 may be configured to transmit an indication of a training frequency, training period, or an event configured to trigger the training. The event may for example comprise a predetermined degradation in radio link quality (e.g. error rate, channel state information, or channel rank) between LTE 110 and access node 120 or a receiving, by UE 110, a request for initiating the training from another apparatus, for example a training request transmitted by access node 120 or core network 130 to LTE 110. LTE 110 may configure training of expander neural network 702 or compressor neural network 712 based on the training schedule or the event configured to trigger the training. For example, LTE 110 may be configured to train expander neural network 702 or compressor neural network 712 periodically according to the indicated training frequency or training period, or initiate training based on detecting the event configured to trigger the training. Training may comprise re-training.

At operation 1040, LTE 110 and access node 120 may be configured to perform synchronization of expander neural network 702 and compressor neural network 712. The synchronization procedure may comprise communication of signalling information between UE 110 and access node 120 after expander neural network 702 and compressor neural network 712 have been deployed at respective apparatuses, for example as will be described with reference to operations 1041 to 1044. The synchronization procedure enables to ensure a minimum link quality, even though expander neural network 702 and compressor neural network 712 might be updated with different frequencies. Synchronization may comprise matching expander neural network 702 and compressor neural network 712 such that parts of the reverse autoencoder trained for similar conditions are deployed at UE 110 and access node 120 at the same time, for example by means of a unique identifier assigned to the applicable reverse autoencoder.

Synchronization may comprise coordinating switching between 1) update and inference cycles for deployed parts of the distributed reverse autoencoder, and/or 2) enabling/disabling processing of transport blocks with the reverse autoencoder (e.g., switching the reverse autoencoder on/off). When the reverse autoencoder is disabled, LTE 110 and access node 120 may be configured to apply a fallback method, such as for example padding the data of transport blocks as described with reference to FIG. 3, or any other non-neural expansion or compression method of data of transport blocks. To enable switching between the update and inference cycles, the reverse autoencoder may be assigned an identifier during the training phase and the identifier may be shared between UE 110 and access node 120. Note that while training of at least part of the reverse autoencoder may be performed either by access node 120 or core network 130, the synchronization related aspects of may be performed by access node 120, because access node configured to deploy part of the reverse autoencoder.

For example, at operation 1041, access node 120 may be configured to transmit a schedule for updating (e.g., re-training) expander neural network 702 or compressor neural network 712, for example depending on which part of the reverse autoencoder is deployed at LTE 110. The schedule may comprise update period(s) and/or inference period(s) for expander neural network 702 or compressor neural network 712. In case of joint training by a single entity, the result of the training (e.g., parameters of the trained part of the reverse autoencoder) may be signalled. In the case of separate training, the indication of the schedule enables to agree on a cadence for the training. UE 110 may then configure updating of expander neural network 702 or compressor neural network 712 based on the received schedule. For example, LTE 110 may be configured to initiate updating of expander neural network 702 or compressor neural network 712 during, e.g., substantially at the beginning of, the update period. UE 110 may be configured to terminate the updating latest at the end of the update period. UE 110 may be configured to apply the updated expander neural network or compressor neural network during an inference period that is subsequent (e.g., next) to the update period. Alternatively, UE 110 may be configured to determine and transmit the schedule to access node 120. In this case, access node 120 may configure updating of its part of the reverse autoencoder according to the schedule received from LTE 110.

For example, at operation 1042, access node 120 may be configured to transmit an indication of trigger(s) for updating the reverse autoencoder. The indication may comprise an indication of event(s) configured to trigger updating of expander neural network 702 or compressor neural network 712 during the inference period(s). This enables to set triggers for metrics that are configured to break the scheduled update/inference cycle, for example depending on measured performance of the expander-compressor chain in particular conditions of wireless radio channel 320. UE 110 may be configured to initiate updating of expander neural network 702 or compressor neural network 712 based on detecting, e.g., during the inference period of expander neural network 702 or compressor neural network 712, the event configured to trigger updating of expander neural network 702 or compressor neural network 712. Monitoring the metrics (e.g., radio link quality, BER, or BLER) may therefore result in triggering update of the reverse autoencoder model, even during inference of the model.

For example, at operation 1043, access node 120 and UE 110 may be configured to exchange a model update ready switch or a fallback trigger to non-neural expansion and/or compression of data of transport blocks. This may be performed to acknowledge turn on/off of the reverse autoencoder or to indicate metric(s), e.g., too high error rate, for triggering the reverse autoencoder on/off, for example fallback to non-neural expansion or compression of transport block data.

For example, at operation 1044, access node 120 may be configured to transmit to UE 110 condition(s) for enabling (e.g., switching on) or disabling (e.g., switching off) expander neural network 702 or compressor neural network 712. LTE 110 may be configured to enable or disable expander neural network 702 or compressor neural network based on the condition(s). For example, UE 110 may be configured to enable or disable expander neural network 702 or compressor neural network 712, in response to detecting the condition(s) to be met. The condition(s) may comprise metrics (e.g., error rate or amount of retransmissions exceeding a threshold), configured to trigger turn-off of the reverse autoencoder model. Upon disablement of expander neural network 702 or compressor neural network 712, UE 110 or access node 120 may be configured to perform fallback to the padding based expansion of data of transport blocks, or any other type of non-neural expansion or compression of data of transport blocks. UE 110 may be configured to disable expander neural network 702 or compressor neural network 712 based on detecting an event configured to trigger the fallback. Ue 110 may be configured to receive an indication of such event from access node 120. Non-neural expansion or compression of data of transport blocks may comprise expansion or compression of data of transport blocks without a neural network, for example the reverse autoencoder. This provides the benefit of ensuring sufficient radio link quality even when facing radio channel conditions for which the reverse autoencoder based expansion and compression does not work well, for example radio channel conditions for which the reverse autoencoder has not been trained. Alternatively, UE 110 may be configured to determine and transmit the condition(s) for triggering enablement or disablement of expander neural network 702 or compressor neural network 712 to access node 120. In this case, access node may be configured to enable/disable expander neural network 702 or compressor neural network 712 accordingly.

Both of operations 1043 and 1044 may be therefore related to the choice of turning the reverse autoencoder on/off. Operation 1044 may be performed for configuring when the reverse autoencoder is considered as a deployable option. Operation 1043 may be performed once the reverse autoencoder is deployed and while the conditions of operation 1044 for keeping the reverse autoencoder on are still valid. Under such conditions, a runtime monitoring metric defined in operation 1043 might still trigger fallback to non-neural expansion or compression of transport block data.

After deployment of the distributed reverse autoencoder, transmitter 310 (e.g., UE 110) may be configured to transmit to receiver 330 (e.g., access node 120) signalling information (e.g., assistance information) to inform receiver 300 about the configuration of expander neural network 702 that has been used for particular transmission(s), for example transport block(s) 808 of particular uplink grant(s), or assistance information associated with the transport block(s). Transmitter 310 may be for example configured to transmit the identifier of expander neural network 702 that has been applied to data of transport block(s) 808. Receiver 330 may be configured to apply a compressor neural network 712 that matches the received identifier to compress the data of the transport block(s). This enables even more dynamic switching between different expander neural networks and compressor neural networks, or configurations thereof, than synchronization procedure 1040.

Alternatively, transmitter 310 may be configured to transmit expander neural network 702 itself (e.g., its trained parameters) to receiver 330 in association with transport block(s) 808 processed by expander neural network 702. Transmitter 310 may be also configured to transmit the current input and output of expander neural network 702, e.g., the input and output of expander neural network 702 applied to certain transport block(s) of the transmission.

Transmitter 310 may be configured to transmit, to receiver 330, an indication of the amount of expanded data in the expanded representation(s) of data 304 in transport block(s) 808. This signalling information has very low overhead and it helps to remove one unknown variable at compressor neural network 712. Note that the amount of expanded data is generally unknown at receiver 330, but compressor neural network 712 has been trained to output correct amount of data based on the expanded representation of the data of the transport block. The amount of expanded data may be equal to the difference between sizes of data 304 and its expanded representation in transport block 808.

Note that an entity that is configured to train at least one part of reverse autoencoder may be configured to operate either as transmitter or receiver. Such entity may be therefore configured to either transmit or receive the signalling information. In general, such entity may be configured to communicate (e.g., transmit or receive) the signalling information with another apparatus. The signalling information may be communicated as out-of-band signalling, for example such that it is transmitted without application of expander neural network 712 to the signalling data, or in general such that it is not encoded together with transport block(s) processed by expander neural network 702.

Transmitter 310 may be configured to determine a cyclic redundancy check (CRC) code based on the expanded representation of data 304. Transmitter 310 may be configured to append the expanded representation of data 304 in transport block 808 with the CRC code. Receiver 330 may be configured to determine whether the CRC code matches the received expanded representation. Receiver 330 may be configured to request re-transmission of transport block 808 based on determining that the CRC code does not match the expanded representation of data 304. Alternatively, receiver 330 may be configured to request any of the types of signalling information (e.g., the amount of expanded data) based on determining that the CRC code does not match the expanded representation of data 304. This provides the benefit of increasing the probability of receiver 330 being able to correctly decode transport block 808, without re-transmission of the entire transport block. The CRC code may be added as an outer CRC after the expansion of data 304 by expander neural network 702. This may be in addition to an inner CRC code may be provided for the transport block construction. Based on detecting correct output of FEC decoder 334 (e.g., passing the outer CRC check) but erroneous inner CRC check (failure in compression), receiver 330 may request any of the above-mentioned signalling information instead of complete re-transmission.

Benefits of the procedures discussed here are subject to some number of spare bits available in the transmission (e.g., UL grant). In an ideal case access node 120 would have perfect knowledge of the status of UE's transmission buffer and packet sizes such that access node is able to allocate exactly correct amount of transmission resources. This is however rarely the case and inevitably some overallocation may happen, for example due to inaccurate buffer status reports (BSR) or the granularity of transmission resource allocation, for example as numbers of physical resource blocks (PRB). The overallocation may be however relatively small and could be opportunistically minimized with assistance information such as padding BSR. However, in context of future communication systems (e.g., 6G), for example the desire for faster L2 processing might lead to larger amounts of padding due to prioritization of power efficiency and speed over spectral efficiency. Example embodiments of the present disclosure provide means to exploit the larger amount of padding to improve transmission robustness and spectral efficiency. If no spare bytes are available or they are very few, a hardware block configured to implement the reverse autoencoder based expansion or compression of data of transport blocks could be entirely turned off. For example in case of a lean L2 stack design, the disclosed solutions may enable hardware processing on L2, minimizing power consumption, and controlling channel quality.

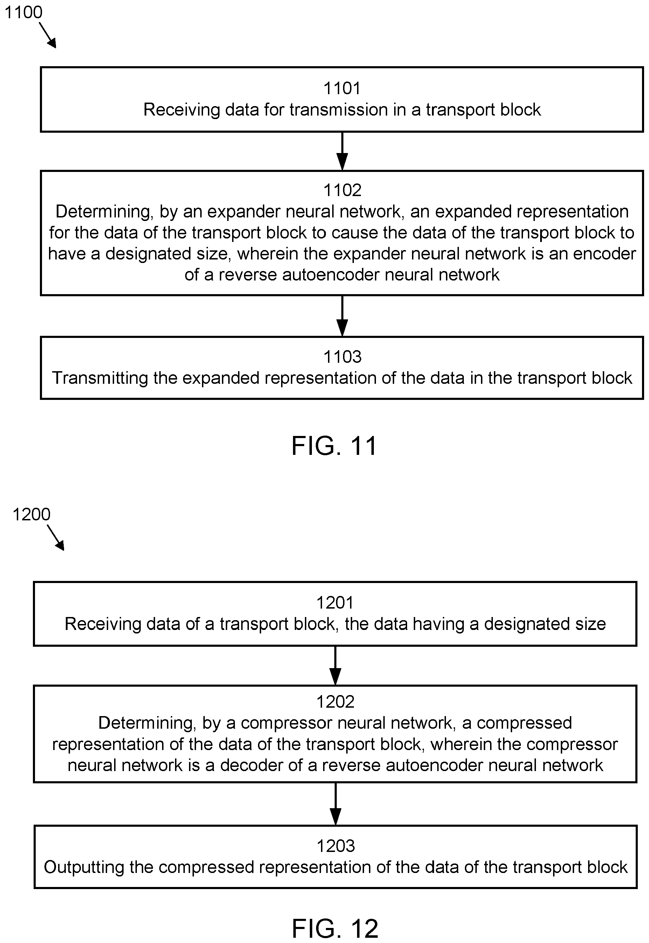

FIG. 11 illustrates an example of a method 110 for expanding data of transport block(s) by an expander neural network. Method 1100 may be performed by an apparatus, e.g., LTE 110 or transmitter 310, or by a control apparatus configured to control the functioning thereof, when installed therein.

At operation 1101, the method may comprise receiving data for transmission in a transport block.

At operation 1102, the method may comprise determining, by an expander neural network, an expanded representation for the data of the transport block to cause the data of the transport block to have a designated size, wherein the expander neural network is an encoder of a reverse autoencoder neural network.

At operation 1103, the method may comprise transmitting the expanded representation of the data in the transport block.

FIG. 12 illustrates an example of a method 1200 for compressing data of transport block(s) by a compressor neural network. Method 1200 may be performed by an apparatus, e.g., access node 120 or receiver 330, or by a control apparatus configured to control the functioning thereof, when installed therein.

At operation 1201, the method may comprise receiving data of a transport block, the data having a designated size.

At operation 1202, the method may comprise determining, by a compressor neural network, a compressed representation of the data of the transport block, wherein the compressor neural network is a decoder of a reverse autoencoder neural network..

At operation 1203, the method may comprise outputting the compressed representation of the data of the transport block.

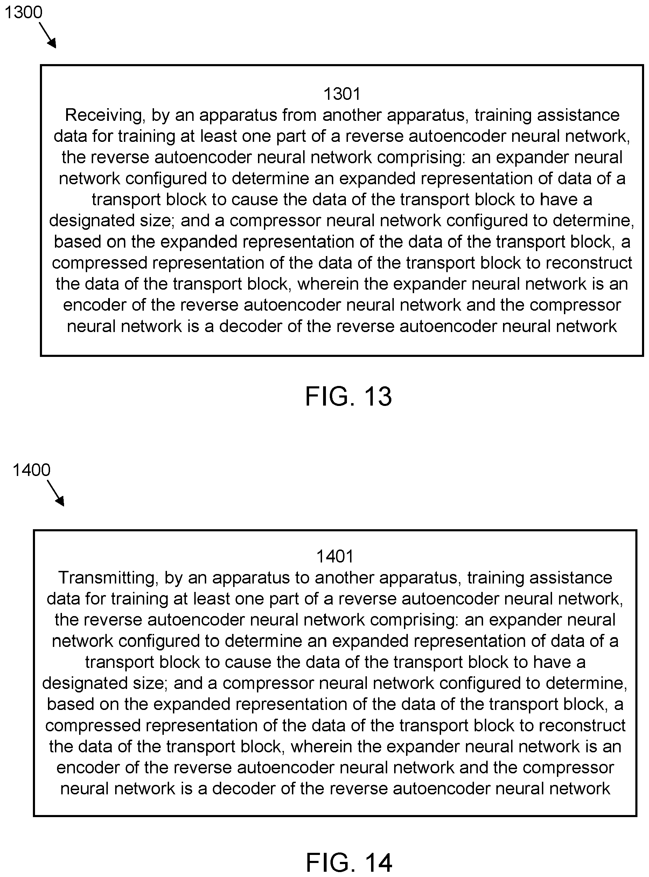

FIG. 13 illustrates an example of a method 1300 for receiving training assistance data for training at least one part of a reverse autoencoder neural network. Method 1300 may be performed by an apparatus, e.g., access node 120, transmitter 310, receiver 330, or a network device, or by a control apparatus configured to control the functioning thereof, when installed therein.

At operation 1301, the method may comprise receiving, by an apparatus from another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

FIG. 14 illustrates an example of a method 1400 for transmitting training assistance data for training at least one part of a reverse autoencoder neural network. Method 1400 may be performed by an apparatus, e.g., LTE 110, transmitter 310, or receiver 330, or by a control apparatus configured to control the functioning thereof, when installed therein.

At operation 1401, the method may comprise transmitting, by an apparatus to another apparatus, training assistance data for training at least one part of a reverse autoencoder neural network, the reverse autoencoder neural network comprising: an expander neural network configured to determine an expanded representation of data of a transport block to cause the data of the transport block to have a designated size; and a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

Further features of the methods directly result for example from functionality of UE 110, access node 120, transmitter 310, receiver 330, and/or core network 130, as described throughout the description, claims, and drawings, and are therefore not repeated here. An apparatus may be configured to perform or cause performance of any aspect of the method(s) described herein. Further, a computer program or a computer program product may comprise instructions for causing, when executed by an apparatus, the apparatus to perform any aspect of the method(s) described herein. Further, an apparatus may comprise means for performing any aspect of the method(s) described herein. According to an example embodiment, the means comprises at least one processor; and at least one memory storing instructions that, when executed by the at least one processor, cause the apparatus at least to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subj ects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
means for receiving, from another apparatus, training assistance data for training at least one part of a reverse autoencoder neural network, the reverse autoencoder neural network comprising:
an expander neural network configured to determine an expanded representation of data of a transport block to cause the data of the transport block to have a designated size; and
a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

2. The apparatus according to claim 1, further comprising:
means for training at least one of the expander neural network or the compressor neural network based on the training assistance data.

3. The apparatus according to claim 1 or 2, wherein the training assistance data comprises an indication of at least one of:
a type of at least one expander neural network or compressor neural network supported by the other apparatus,
a maximum depth of the at least one expander neural network or compressor neural network supported by the other apparatus,
a maximum input size of the at least one expander neural network or compressor neural network supported by the other apparatus,
a capability to support parallel deployments of expander neural networks or compressor neural networks, or
a capability for substantially real-time switching between the parallel deployments of the expander neural networks or compressor neural networks.

4. The apparatus according to claim 3, wherein the training assistance data is included in an expander capability report or a compressor capability report.

5. The apparatus according to any of claims 1 to 4, further comprising:
means for transmitting, to the other apparatus, at least one of the following:
a configuration of the expander neural network,
an identifier of the expander neural network,
a configuration of the compressor neural network, or
an identifier of the trained compressor neural network.

6. The apparatus according to claim 1 or 2, wherein the training assistance data comprises an indication of at least one of the following:
a type of a radio channel configured for training the expander neural network or the compressor neural network at the other apparatus,
a delay spread or a delay spread range of the radio channel,
a Doppler spread or a Doppler spread range of the radio channel, or
a signal-to-interference-plus-noise ratio or a signal-to-interference-plus-noise ratio range of the radio channel.

7. The apparatus according to any of claims 1, 2, or 6, wherein the training assistance data comprises an indication of at least one of the following:
a type or code rate of forward error correction coding configured for the transport block,
a type or order of modulation order configured for the transport block,
a minimum or maximum size for the transport block,
a minimum or maximum code block size for segmentation of the transport block for the forward error correction coding,
input size or output size of the expander neural network, or
input size or output size of the compressor neural network.

8. The apparatus according to any of claims 1, 2, 6, or 7, further comprising:
means for receiving, from the other apparatus, at least one of the following:
a schedule for training the expander neural network or the compressor neural network, or
an event configured to trigger the training of the expander neural network or the compressor neural network; and
means for configuring training of the expander neural network or the compressor neural network based on the schedule for the training or the event configured to trigger the training.

9. The apparatus according to claim 8, wherein the event comprises at least one of the following:
a predetermined degradation in radio link quality between the apparatus and the other apparatus, or
a request for initiating the training from the other apparatus.

10. The apparatus according to any of claims 6 to 9, further comprising:
means for transmitting, to the other apparatus, at least one of the following:
training data used for training the expander neural network or the compressor neural network,
an identifier of the expander neural network trained with the training data with, or
an identifier of the compressor neural network trained with the training data.

11. The apparatus according to any of claims 1 to 10, further comprising:
means for transmitting, to the other apparatus, at least one of the following:
a schedule for updating the expander neural network or the compressor neural network,
an indication of an event configured to trigger updating of the expander neural network or the compressor neural network during an inference period of the expander neural network or the compressor neural network,
at least one condition for enabling or disabling the expander neural network or the compressor neural network, or
an indication of an event configured to trigger fallback to non-neural expansion or compression of data of transport blocks.

12. An apparatus, comprising:
means for transmitting, to another apparatus, training assistance data for training at least one part of a reverse autoencoder neural network, the reverse autoencoder neural network comprising:
an expander neural network configured to determine an expanded representation of data of a transport block to cause the data of the transport block to have a designated size; and
a compressor neural network configured to determine, based on the expanded representation of the data of the transport block, a compressed representation of the data of the transport block to reconstruct the data of the transport block, wherein the expander neural network is an encoder of the reverse autoencoder neural network and the compressor neural network is a decoder of the reverse autoencoder neural network.

13. The apparatus according to claim 12, further comprising:
means for receiving, from the other apparatus, training data used for training a trained part of the reverse autoencoder neural network; and
means for training a non-trained part of the reverse autoencoder neural network based on the training data and/or the training assistance data.

14. The apparatus according to claim 13, further comprising:
means for receiving, from the other apparatus, an identifier of the trained part of the reverse autoencoder neural network trained with the training data, and
means for assigning the identifier of the trained part of the reverse autoencoder neural network to the non-trained part of the reverse autoencoder neural network in association with training the non-trained part of the reverse autoencoder neural network with the training data.

15. The apparatus according to any of claims 12 to 14, further comprising:
means for receiving, from the other apparatus, at least one of the following:
a schedule for updating the expander neural network or the compressor neural network,
an indication of an event configured to trigger updating of the expander neural network or the compressor neural network during an inference period of the expander neural network;
at least one condition for enabling or disabling the expander neural network or the compressor neural network, or
an indication of an event configured to trigger fallback to non-neural expansion or compression of data of transport blocks; and
means for configuring the updating of the expander neural network or the compressor neural network based on the schedule for updating the expander neural network or the compressor neural network,
means for initiating the updating of the expander neural network or the compressor neural network based on detecting, during the inference period of expander neural network or the compressor neural network, the event configured to trigger updating of the expander neural network or the compressor neural network,
means for enabling or disabling the expander neural network or the compressor neural network based on the at least one condition, or
means for disabling the expander neural network or the compressor neural network based on detecting the event triggering the fallback.
